# EUROPÄISCHE PATENTSCHRIFT

(11) **EP 1 916 415 B1**
(45) Veröffentlichungstag und Bekanntmachung des Hinweises auf die Patenterteilung: **14.07.2010**
(21) Anmeldenummer: 06022558.8
(22) Anmeldetag: 28.10.2006
(51) Int. Cl.: F03D 1/04

(54) **Windkraftanlage sowie Verfahren zur Erzeugung von elektrischer Energie aus bewegter Umgebungsluft**
Windturbine and method for producing electricity from surrounding moving air
Eolienne et procédé pour la production d'électricité de l'air environnant mobile

(43) Veröffentlichungstag der Anmeldung: 30.04.2008
(73) Patentinhaber: Hörnig, Maria, 28279 Bremen (DE)
(72) Erfinder: Reitz, Georg, 28357 Bremen (DE)
(74) Vertreter: Strobel, Wolfgang

(56) Entgegenhaltungen:
- EP-A2- 1 233 178
- DE-A1- 2 717 043
- JP-A- 55 164 783
- US-A- 5 300 817
- US-A1- 2003 137 149
- US-A1- 2003 156 938

## Beschreibung

Die vorliegende Erfindung betrifft eine Windkraftanlage zur Erzeugung von elektrischer Energie mittels bewegter Umgebungsluft. Weiterhin betrifft die vorliegende Erfindung ein Windkraftanlagensystem, ebenfalls zur Erzeugung von elektrischer Energie mittels bewegter Umgebungsluft.

Schließlich betrifft die vorliegende Erfindung ein Verfahren zur Erzeugung elektrischer Energie aus bewegter Umgebungsluft.

Seit Jahren wird nicht zuletzt durch die staatliche Förderung zur Nutzung erneuerbarer Energie an Lösungen geforscht, die die Problematik von fossilen Brennstoffen überwinden sollen. Beispielhaft sei hier die Windenergie, die thermodynamische Energie, Biokraftstoffe sowie Wasserstoffe erwähnt. Trotz aller Anstrengungen ist es bisher jedoch nicht gelungen, diese Energieformel wirtschaftlich so zur Verfügung zu stellen, dass sie im Vergleich zur herkömmlichen Energieumwandlung, wie zum Beispiel Kernkraft, Gas und Kohle wirtschaftlich konkurrenzfähig sind.

Für die Nutzung der Windenergie wurden bereits erhebliche Investitionen getätigt, die zur Entwicklung und Verwirklichung von Windrädern in Einzelaufstellungen oder Windparks geflossen sind. Die Umsetzung von Windenergie mittels Windrädern hat den großen Nachteil, dass der Ausbeutungsgrad der Windenergie äußerst gering ist, insbesondere im Hinblick auf die Kosten für die Entwicklung, Herstellung und Aufstellung derartiger Windräder bzw. Windräderparks. Zusätzliche besteht der erhebliche Nachteil, dass derartige Windkraftwerke nur bei ausreichender Windstärke, die bereits erheblich sein muss betrieben werden können, wobei zusätzlich erhebliche Umweltschutznachteile bestehen. Diese finden ihren Ausdruck sowohl in einer unangenehmen Geräuschentwicklung als auch in einer äußerst irritierenden Schattenbildung bzw. Schattenfrequenz. Weiterhin ist eine konstante bzw. stabile Energieerzeugung nicht möglich, da mit stetigen Wind- und Windstärkenänderungen zu rechen ist.

Ein noch größerer Nachteil ist der enorme Platzbedarf pro erzeugter Energieeinheit.

Aus der US 2003/0156938 A1 ist eine Windkraftanlage bekannt, die in Form einer vertikal angeordneten Düse ausgebildet ist. Über einen mit vertikalen Schlitzen versehenen Eingangshülsenbereich soll Umgebungswind eingefangen werden und in einem sich verjüngenden Abschnitt einfließen an dessen Ausgang sich eine Turbine befindet, die durch den durchfließenden Luftstrom angetrieben werden soll. In einem sich aufweitenden Abschnitt wird dann die am Windgenerator vorbei geströmte Luft wieder senkrecht nach unten ausgelassen.

Aus der EP 1 233 178 A2 ist eine Windkraftanlage bekannt, die aus einer Mehrzahl von einzelnen Abschnitten ausgebildet ist. In einer Ausführungsform weist die Windkraftanlage einen ersten Abschnitt mit im wesentlichen konstanten Querschnitt auf, in den die Umgebungsluft einbringbar ist, wobei eine Luftbeschleunigungseinrichtung im ersten Abschnitt vorgesehen ist. Die Windkraftanlage gemäß dieses Standes der Technik weist weiterhin einen zweiten sich verjüngenden Abschnitt und einen sich an den zweiten Abschnitt anschließenden dritten Abschnitt auf, in dem ein Rotor angeordnet ist, der durch den durchströmenden Luftstrom in Drehung versetzt wird und dessen Drehung zur Erzeugung elektrischer Energie dient. Daran schließt sich ein vierter sich aufweitender Abschnitt an, wonach die durchströmende Umgebungsluft wieder nach außen abgeleitet wird.

Eine derartig aufgebaute Windkraftanlage hat jedoch den Nachteil, dass keine optimale Durchströmung durch die einzelnen Abschnitte erfolgt, insbesondere ergeben sich Nachteile beim Ausbringen der durchströmten Umgebungsluft wieder in die Umgebung.

Der vorliegenden Erfindung liegt deshalb die Aufgabe zugrunde, eine Windkraftanlage zur Erzeugung von elektrischer Energie mittels bewegter Umgebungsluft zu schaffen, welche bei einer optimalen Durchströmung arbeitet.

Weiterhin liegt der vorliegenden Erfindung die Aufgabe zugrunde, ein Windkraftanlagensystem zu schaffen, mit dem eine Energieerzeugung erreicht wird.

Schließlich liegt der vorliegenden Erfindung die Aufgabe zugrunde, ein Verfahren zur Erzeugung elektrischer Energie aus bewegter Umgebungsluft zu schaffen, mit dem Energie erzeugt werden kann.

Erfindungsgemäß weist die Windkraftanlage einen Strömungskanal auf, durch den die Umgebungsluft durch Ausbildung eines Luftstromes geleitet wird, wobei der Strömungskanal eine ihn begrenzende äußere Hülle und weiterhin aufweist:
- einen ersten Abschnitt mit im Wesentlichen konstanten Querschnitt, in den die Umgebungsluft einbringbar ist, wobei eine Luftbeschleunigungseinrichtung in dem ersten Abschnitt vorgesehen ist,
   einen zweiten sich verjüngenden Abschnitt,
- einen sich an den zweiten Abschnitt anschließenden dritten Abschnitt, in dem ein Rotor angeordnet ist, der durch den durchströmenden Luftstrom in Dre-hung versetzt wird und dessen Drehung zur Erzeugung elektrischer Energie dient,
- einen vierten sich aufweitenden Abschnitt, und
- einen fünften Abschnitt, in dem eine zweite Luftbeschleunigungseinrichtung vorgesehen ist, die der Ausbringung der in den Strömungskanal eingeführten Luft dient.

Mit der erfindungsgemäßen Windkraftanlage, wird vorteilhafterweise erreicht, dass einerseits die Beschleunigungseinrichtungen, die notwendige Volumenarbeiten leisten, damit die Umgebungsluft in den Strömungskanal ein- bzw. wieder aus dem Strömungskanal in die freie Umgebung ausgeführt wird. Andererseits wird damit ein Überdruck im Einlass sowie ein Unterdruck im Auslass erzeugt wodurch eine optimale Strömungsgeschwindigkeit im Strömungskanal erzielt wird.

Ein wesentlicher Vorteil der vorliegenden Erfindung liegt auch darin, dass der durchströmenden Luft nicht nur kinetische Energie sondern auch in erheblichem Maß Wärmeenergie entzogen wird.

Vorteilhafterweise weist die Luftbeschleunigungseinrichtung des ersten und/oder des fünften Abschnittes des Strömungskanals wenigstens einen Ventilator auf. Mit Hilfe derartiger Ventilatoren kann der Luftstrom auf einfache und beherrschbare Weise beschleunigt werden, wobei als Ventilatoren Standardbauteile kostengünstig Verwendung finden.

Vorteilhafterweise weist die erfindungsgemäße Windkraftanlage in Strömungsrichtung der Umgebungsluft nach der Luftbeschleunigungseinrichtung des ersten und/oder des fünften Abschnitts des Strömungskanals eine Strömungsleiteinrichtung auf, die den von der jeweiligen Luftbeschleunigungseinrichtung verwirbelten bzw. rotierenden Luftstrom in eine laminare Strömung überführt. Aufgrund dieser laminaren Strömung ergibt sich ein deutlich erhöhter Wirkungsgrad der Windkraftanlage.

In einer bevorzugten Ausführungsform ist die Strömungsleiteinrichtung als ein Nachleitrad ausgebildet. Dieses auf einfache Weise aufgebaute Nachleitrad ist in der Lage, die verwirbelte Luftströmung in eine laminare Luftströmung überzuführen.

Alternativ kann die Strömungsleiteinrichtung auch als eine Parallelrohr-Einrichtung ausgebildet sein. Vorzugsweise weist eine derartige Parallelrohr-Einrichtung ein zentrales durchmessergroßes Mittenrohr auf, um das sich konzentrisch angeordnete parallele Rohre kreisförmig erstrecken, wobei deren Durchmesser von Rohrkreis zu Rohrkreis zunimmt und gegenüber dem Mittenrohr bei einem relativ kleinen Rohrdurchmesser beginnt.

Weiterhin ist vorteilhaft, dass zur Optimierung der Ausbildung einer Laminarströmung im Strömungskanal die Strömungsleiteinrichtung sowohl ein Nachleitrad als auch eine Parallelrohr-Einrichtung umfasst.

Mit besonderem Vorteil weist die erfindungsgemäße Windkraftanlage vor der Luftbeschleunigungseinrichtung des ersten Abschnitts und/oder der Luftbeschleunigungseinrichtung des fünften Abschnitts eine Luftleiteinrichtung zur Erzielung einer laminaren Luftströmung auf. Dies führt zur Optimierung der Luftbeschleunigungseinrichtung, insbesondere zur Erhöhung der Konstanz der Luftgeschwindigkeit einerseits und der Optimierung des Energieverbrauchs der Luftbeschleunigungseinrichtung andererseits.

Besonders vorteilhaft wird eine Parallelrohr-Einrichtung vor der Luftleiteinrichtung des fünften Abschnitts vorgesehen, die zu einer weiteren Beruhigung und ggfs. zusätzlichen Überführung in eine laminare Strömung, des ausgehend von dem Rotor in dem sich aufweitenden Abschnitt strömenden Luftstroms dient.

Vorteilhafterweise verengt sich der Strömungskanal zur Beibehaltung der laminaren Strömung im Bereich des sich verjüngenden Abschnitts mit einem Winkel α von 15° oder kleiner. Dadurch wird vorteilhafterweise erreicht, dass die laminare Strömung beibehalten wird und damit optimiert im dritten Abschnitt mit dem Rotor zugeführt werden kann.

Nach dem Rotor weitet sich der Strömungskanal im Bereich des sich aufweitenden Abschnitts vorteilhafterweise mit einem Winkel β von 7° oder kleiner auf. Eine derartige Ausgestaltung hat sich als besonders vorteilhaft erwiesen.

Vorteilhafterweise ist der Durchmesser des Strömungskanals im Bereich des ersten Abschnitts gleich groß dem Durchmesser im Bereich des fünften Abschnitts. Dies bedeutet, dass in den Bereichen der Luftbeschleunigungseinrichtungen der Durchmesser des Strömungskanals gleich groß ist.

Weiterhin ist besonders vorteilhaft, dass der Querschnitt des Auslasses des Strömungskanals größer ist als der Querschnitt des Einlasses des Strömungskanals, wobei er vorzugsweise im Wesentlichen doppelt so groß ist. Dies hat den besonderen Vorteil, dass die Austrittsgeschwindigkeit der Luftströmung in die Umgebung erheblicher reduziert wird, und dadurch die Luftströmung entsprechend einfacher in die Umgebung ausbringbar ist.

Vorteilhafterweise ist hinter der Strömungsleiteinrichtung nach der Luftbeschleunigungseinrichtung im ersten Abschnitt ein sich zu einer Spitze verjüngender Strömungskegel vorgesehen, entlang dem der Luftstrom strömt, wobei sich die Strömungskanalhülle entsprechend verengt. Dadurch wird vorteilhafterweise erreicht, dass die Fläche der Nabe des Nachleitrades bzw. der Nabe des Einlassventilators strömungstechnisch so neutralisiert wird, dass hinter der Spitze ein ungestörter Luftstrom erreichbar ist. Die Verringerung des Außenquerschnitts dient dem Erhalt der Strömungsgeschwindigkeit.

Zur weiteren Beruhigung des Luftstroms schließt sich an den sich verengenden Strömungskanalabschnitt ein Abschnitt konstanten Querschnitts an, in dem bevorzugt eine weitere Strömungsleiteinrichtung vorgesehen ist, die zur Erhöhung der laminaren Strömung dient. Es wird an dieser Stelle erneut darauf hingewiesen, dass ein Parameter für die Erzielung des maximalen Wirkungsgrades ist, dass die Strömung im Strömungskanal so weit wie möglich laminar verläuft, wobei die durch die Beschleunigungseinrichtungen bzw. den Rotor erzeugten Verwirbelungen entsprechend neutralisiert werden müssen.

Um diesen Vorteil zu erreichen, ist erfindungsgemäß in dem zweiten Abschnitt ein sich von einer Spitze bis zum Querschnitt der Nabe des Rotors aufweitender Konus vorgesehen, der die Luftströmung in die ringförmige Kammer, die zu dem Rotor führt, entsprechend sanft einleitet.

Weiterhin ist vorteilhaft, dass in dem vierten Abschnitt ein sich zu einer Spitze verjüngender Konus vorgesehen ist, dessen Ausgangsquerschnitt im Wesentlichen gleich dem Querschnitt der Nabe des Rotors ist.

Mit Vorteil schließt sich an den vierten Abschnitt eine Beruhigungsstrecke des Strömungskanals, die einen im Wesentlichen konstanten Außendurchmesser und bevorzugt eine weitere Strömungsleiteinrichtung aufweist. Damit wird wiederum eine laminare Strömung sichergestellt wodurch die Effizienz der Windkraftanlage weiter gesteigert wird.

Eine solche Steigerung wird auch dadurch erreicht, dass im fünften Abschnitt vor der Strömungsleitereinrichtung ein sich von einer Spitze aufweitender Konus oder Kegel vorgesehen ist, dessen Endquerschnitt im Wesentlichen dem Querschnitt der Nabe der Strömungsleiteinrichtung entspricht.

Erfindungsgemäß umfasst der dritte Abschnitt ein Getriebe, das die Drehbewegung des Rotors in eine Drehbewegung wenigstens einer sich dem Wesentlichen senkrecht zum Strömungskanal erstreckenden Ausgangs- oder Abtriebswelle übersetzt, die mit einem Generator verbunden ist und diesen antreibt. Die gesamte Anordnung kann somit sehr platzsparend ausgeführt werden.

Weiterhin ist vorteilhaft, dass das Getriebe ein Gehäuse aufweist, in dem eine Welle gelagert ist, wobei die Welle auf der einen Seite außerhalb des Gehäuses mit einem Rotor verbunden ist, und auf der anderen Seite mit einer um 90° versetzten Abtriebswelle verbunden ist, und das Gehäuse des Getriebes in einer Lagereinrichtung gelagert ist, die Lagerplatten aufweist, die mit der Außenhülle des Strömungskanals verbunden sind. Mit dieser Ausgestaltung kann besonders vorteilhaft eine platzsparende und wirksame Umsetzung der Energie aus der Strömungsluft in eine Antriebswellenenergie einer Abtriebswelle umgesetzt werden.

Weiterhin ist vorteilhaft, dass der Rotor auf einer Welle gelagert ist, die mit der Lagereinrichtung drehfest verbunden ist, dass der Rotor einen Außenrohrabschnitt aufweist, der einen Teil der Außenhülle des Strömungskanals bildet, wobei der Außenrohrabschnitt einen Zahnkranz aufweist, der zur Übertragung der Drehung über ein Getriebe zu einem Generator dient. Somit kann in dieser alternativen Ausführungsform vorteilhafterweise eine Übertragung einer durch den Rotor erzeugten Wellendrehbewegung nach außen über ein innen anzuordnendes Getriebe vermieden werden. Vorteilhafterweise kann die Antriebskraft an der Außenseite des Rotors abgegriffen werden, was vorteilhafterweise dadurch erfolgt, dass zur Übertragung der Drehung des Rotors mehrere, insbesondere vier am Umfang gleich verteilte Ritzel vorgesehen sind, die jeweils mit einer Abtriebswelle verbunden sind, die ihrerseits jeweils mit einem Generator verbunden sind.

In einer weiteren besonders vorteilhaften alternativen Ausführungsform ist der Rotor auf einer Welle gelagert, die mit der Lagereinrichtung drehfest verbunden ist, wobei der Rotor einen Außenabschnitt aufweist, der das Polrad bzw. den Anker eines Generators antreibt. Damit wird ein jegliches Getriebe zur Übertragung der Drehbewegung des Rotors zu einem Generator mittels entsprechender Wellen vermieden. Entsprechend gering ist der Verschleiß dieser Funktionselemente und der gesamten Anlage.

Da sich die Windrichtung der Umgebungsluft ändert, ist es von besonderem Vorteil, dass die Windkraftanlage in einem Gestell angeordnet ist, das drehbar gelagert ist. Dadurch kann die Windkraftanlage entsprechend der Windrichtung ausgerichtet werden.

Weiterhin ist vorteilhaft, dass das Gestell eine Bodenwand, eine obere Abdeckwand und eine Mehrzahl von Stützen aufweist, wobei die ersten bis fünften Abschnitte des Strömungskanals im Wesentlichen zwischen den äußeren Stützen angeordnet sind. Dies führt zu den besonderen Vorteil, dass die Windkraftanlage gekapselt und insbesondere schallgedämmt werden kann, wodurch sie geeignet ist, nicht nur in reinen Industriegebieten bzw. im Außenraum, sondern auch in Mischgebieten angeordnet zu werden.

Zur Erhöhung der Windgeschwindigkeit der einströmenden Umgebungsluft ist vorteilhafterweise ein weiterer sich verjüngenden Abschnitt vor dem ersten Abschnitt vorgesehen.

Weiterhin ist vorteilhaft auch an der Luftauslaß- bzw. Luftausbringseite ein weiterer sich aufweitender Abschnitt vorgesehen, mit Hilfe dessen die die Windkraftanlage durchströmte Luft noch vorteilhafter ausgebracht werden kann. Beide Düsen können dabei nicht nur einen sich konstant ändernden Querschnitt, sondern auch einen sich nicht konstant ändernden Querschnitt aufweisen, wie beispielsweise eine Glockenform.

Um eine besonders leichte Drehbarkeit des gesamten Gestells und damit der Windkraftanlage zu ermöglichen, weist die erfindungsgemäße Windkraftanlage einen Auftriebskörper auf, der in einem mit Flüssigkeit gefülltes Bassin schwimmend aufgenommen bzw. gelagert ist. Dadurch kann die Drehung nahezu ohne Überwindung von Reibungskräften erfolgen.

Mit besonderem Vorteil umfasst die erfindungsgemäße Windkraftanlage auch eine Ausführungsform, in der sie vertikal angeordnet ist. Hierdurch wird der Vorteil erreicht, dass ein "umgekehrter Kamineffekt" erreicht wir. Durch die starke Abkühlung der Luft hinter dem Rotor wird diese schwerer, fällt schneller nach unten und zieht sogar wärmere Luft oberhalb des Rotors an.

Mit Vorteil ist eine Lufteinschleusvorrichtung am oberen Einlass der Windkraftanlage vorgesehen, die bevorzugt halbkreisförmig ausgestaltet ist. Dadurch wird die Umgebungsluftströmung zum Einlass der Windkraftanlage hingeleitet.

Weiterhin ist vorteilhaft, dass an der Auslassseite eine Strömungsumlenkeinrichtung vorgesehen ist, die einen Strömungskanal aufweist, der den ausströmenden Luftstrom von der vertikalen Richtung in eine im Wesentlichen horizontale Richtung umlenkt. Damit wird der Luftstrom parallel zum Umgebungsluftstrom ausgerichtet und entsprechend günstig von diesem mitbewegt.

Vorteilhafterweise ist der Strömungskanal in einem Umströmungskörper angeordnet, der von Umgebungsluft umströmt wird. Dieser Umströmungskörper unterstützt die Anlage bei der Nachführung der Anlage in die Windrichtung und erzeugt einen Sog mit dem die aus der Windkraftanlage ausströmende Luft mitgerissen wird.

Eine Anlage wird erfindungsgemäß dadurch erreicht, dass sich der Strömungskanal in Strömungsrichtung aufweitet, beispielsweise in seinem horizontalen Abschnitt, wodurch ein besseres Abströmen erreicht wird, insbesondere dann, wenn eine weitere Luftbeschleunigungseinrichtung in dem Kanal vorgesehen ist.

Zur noch weiteren verbesserten Abströmung des Luftstromes aus der Windkraftanlage sind in Strömungsrichtung hinter dem Strömungskanal mehrere Leitplatten angeordnet, die bevorzugt über den Querschnitt des Strömungskanals hervorstehen. Dadurch wird nicht nur der Luftstrom des Strömungskanals besser geleitet, sondern auch die Umgebungsluft in diesem Grenzbereich ausgerichtet.

Weiterhin ist vorteilhaft, dass an der Windkraftanlage ein Segel angebracht ist, das dazu dient, diese in die optimale Strömungsrichtung der Umgebungsluft nachzuführen.

Die vorliegende Erfindung betrifft auch ein Windkraftanlagensystem zur Erzeugung von elektrischer Energie mittels bewegter Umgebungsluft, wobei das Windkraftanlagensystem mehrere übereinander- und/oder nebeneinander angeordnete Windkraftanlagen, wie sie oben beschrieben sind, aufweist.

Vorzugsweise weist das Windkraftanlagensystem ein Gestell auf, in dem die übereinander und/oder nebeneinander angeordneten Windkraftanlagen drehbar gelagert sind. Damit kann auch das Windkraftanlagensystem entsprechend der Windrichtung nachgeführt werden.

Schließlich betrifft die vorliegende Erfindung auch ein Verfahren zur Erzeugung elektrischer Energie aus bewegter Umgebungsluft, das die folgenden Schritte aufweist:
- Einbringen von Umgebungsluft in einen ersten Abschnitt eines Strömungskanals,
- Beschleunigen des Luftstroms mittels einer Beschleunigungseinrichtung, die in dem ersten Abschnitt des Strömungskanals angeordnet ist,
- weiteres Beschleunigen des Luftstroms in einem zweiten Abschnitt des Strömungskanals mittels einer Verengung des Strömungskanals in Form eines sich verjüngenden Abschnitts,
- Durchführen des Luftstroms durch einen dritten Abschnitt des Strömungskanals und Antreiben eines Rotors in diesem Abschnitt,
- Ausbringen des Luftstroms in einem vierten sich aufweitenden Abschnitt des Strömungskanals,
- erneutes Beschleunigen des Luftstroms in einem fünften Abschnitt des Strömungskanals, und
- Ausbringen des Luftstroms in die Umgebung, wobei dem Luftstrom während des Durchströmens des Strömungskanals sowohl kinetische Energie als auch Wärmeenergie entzogen wird.

Vorteilhafterweise wird vor der Beschleunigungseinrichtung des ersten und/oder fünften Abschnitts des Strömungskanals die einströmende Luft als laminare Strömung ausgerichtet. Dies dient zur deutlichen Erhöhung der Effizienz des Verfahrens.

Weiterhin ist vorteilhaft, dass nach der Beschleunigungseinrichtung des ersten und/oder fünften Abschnittes des Strömungskanals die durchströmende Luft erneut in eine laminare Strömung ausgerichtet wird. Dies dient wiederum zur Beruhigung und Verbesserung der Luftströmung im Strömungskanal und damit zur Erhöhung der Effizienz des Verfahrens.

Weiterhin ist vorteilhaft, dass der Luftstrom im ersten und zweiten Abschnitt des Strömungskanals beim Eintritt in den dritten Abschnitt des Strömungskanals auf eine vorbestimmte Geschwindigkeit beschleunigt wird. Durch das Einstellen der Geschwindigkeit auf eine vorbestimmte Geschwindigkeit wird erreicht, dass das Verfahren bei einem Optimum durchgeführt wird, d. h. der Rotor mit einer optimalen Luftgeschwindigkeit durchströmt wird. Eine Optimierung des Verfahrens wird auch dadurch erreicht, dass durch den fünften Abschnitt ein Unterdruck im vierten Abschnitt erzeugt wird, wodurch die Luft nach Austritt aus dem Rotor aktiv abgesaugt wird.

Weitere Einzelheiten, Merkmale und Vorteile der vorliegenden Erfindung ergeben sich aus der nachfolgenden Beschreibung unter Bezugnahme auf die Zeichnung. Darin zeigt:

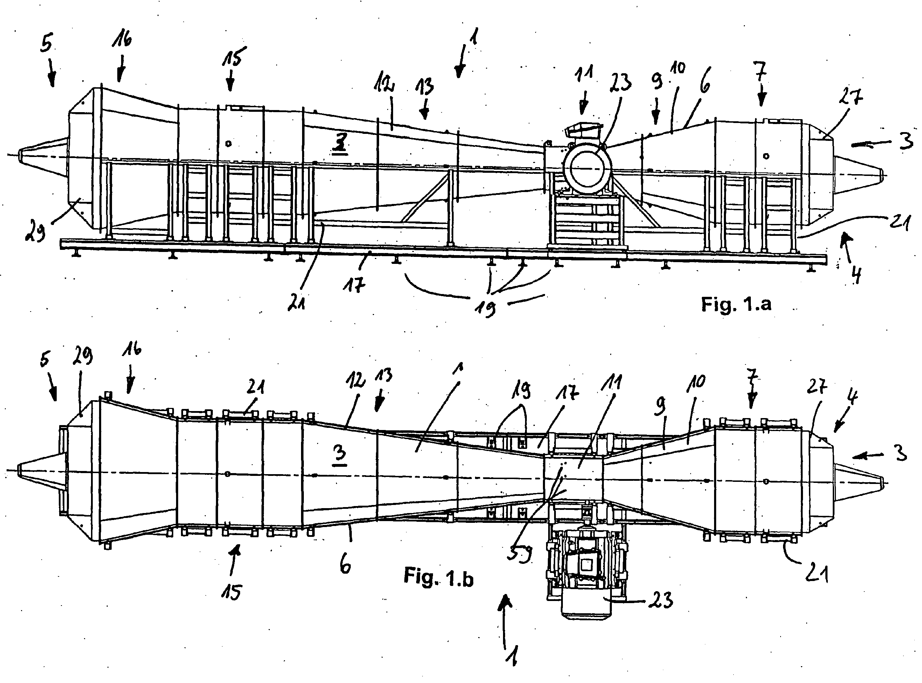

- - Figur 1.a: eine Seitenansicht einer ersten Ausführungsform der erfindungsgemäßen Windkraftanlage in Seitenansicht;
- - Figur 1.b: die erfindungsgemäße Windkraftanlage von Figur 1.a in Draufsicht;
- - Figur 2.a: die erfindungsgemäße Windkraftanlage von Figur 1.a in Schnittansicht;

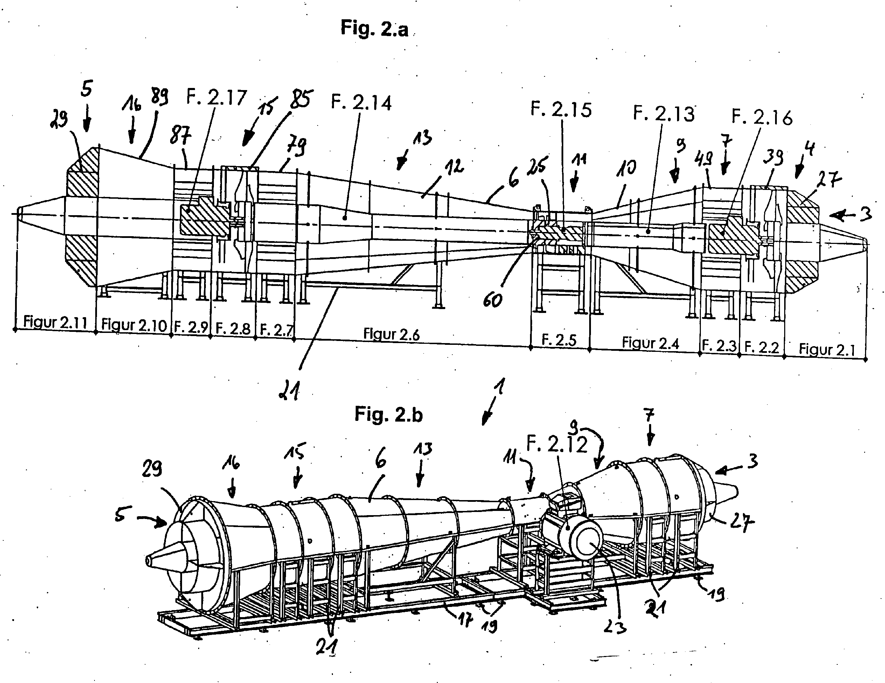

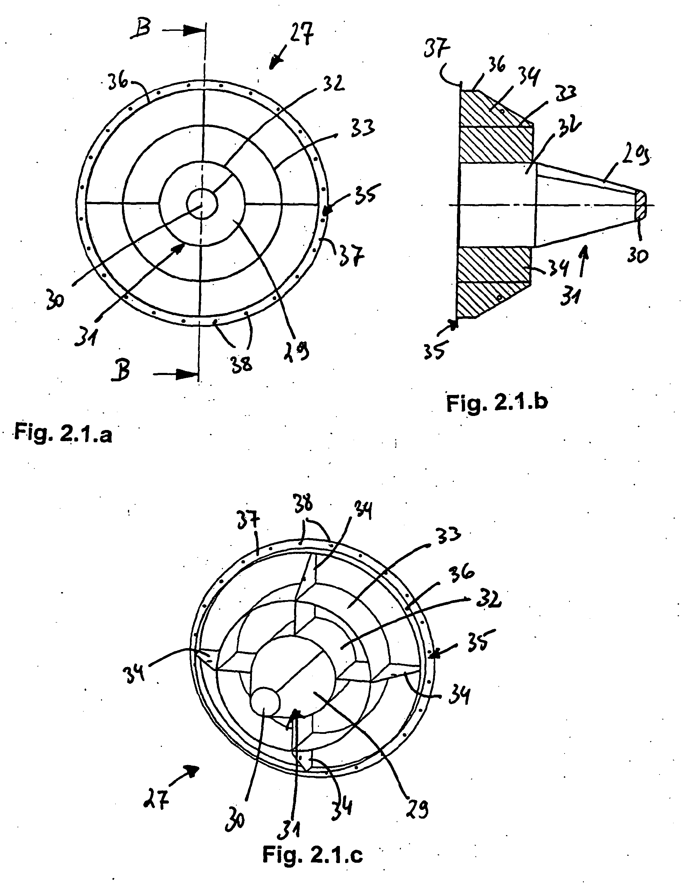

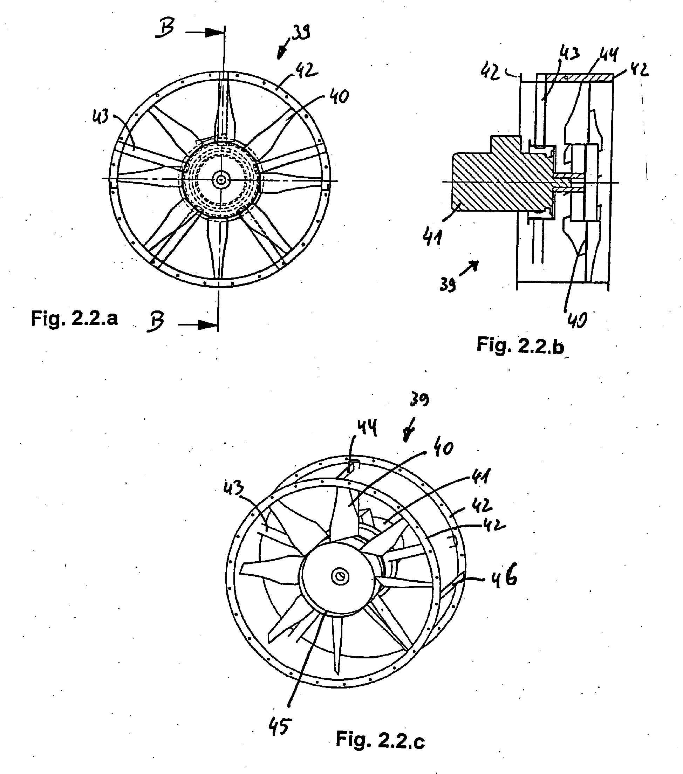

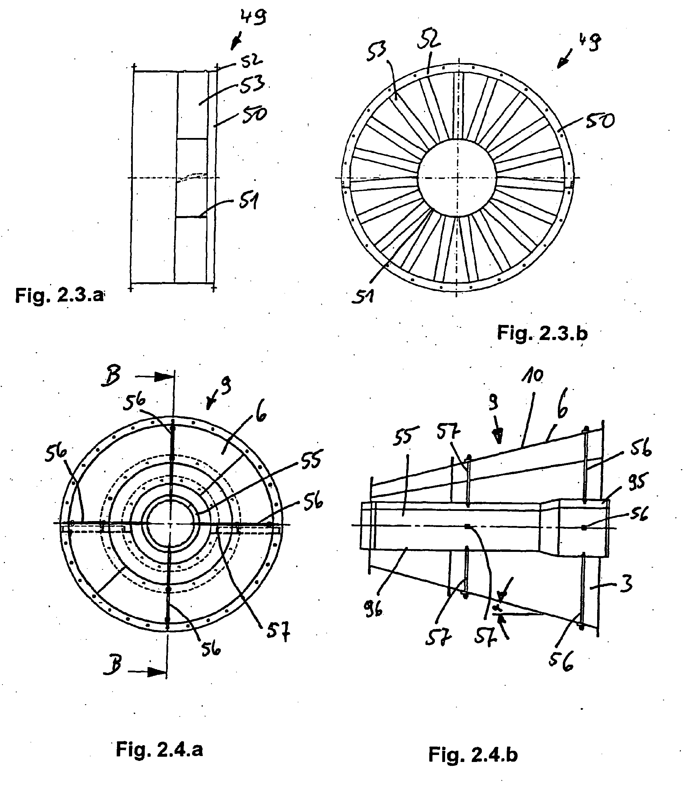

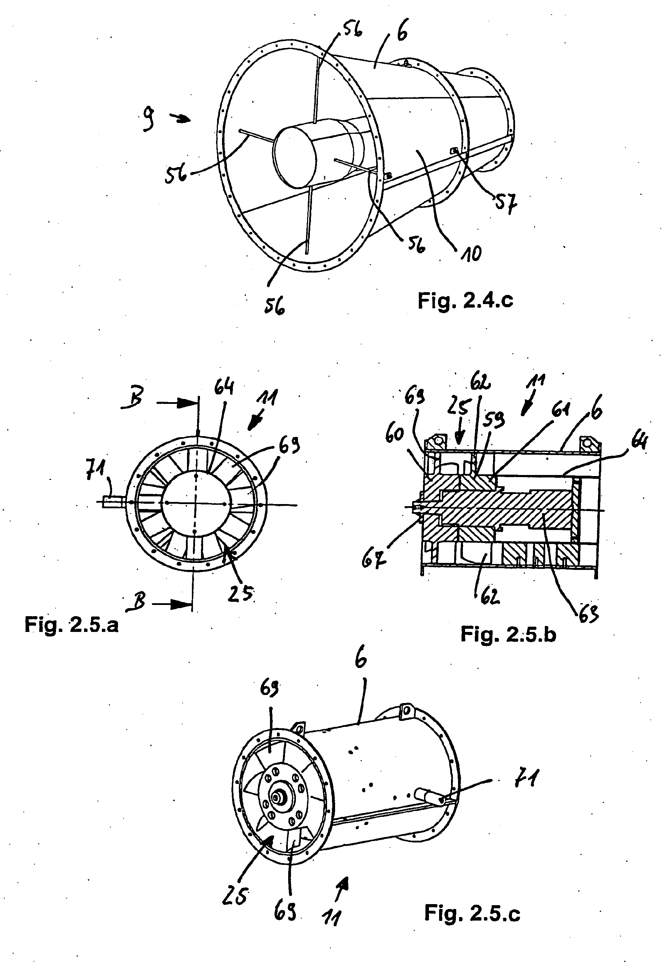

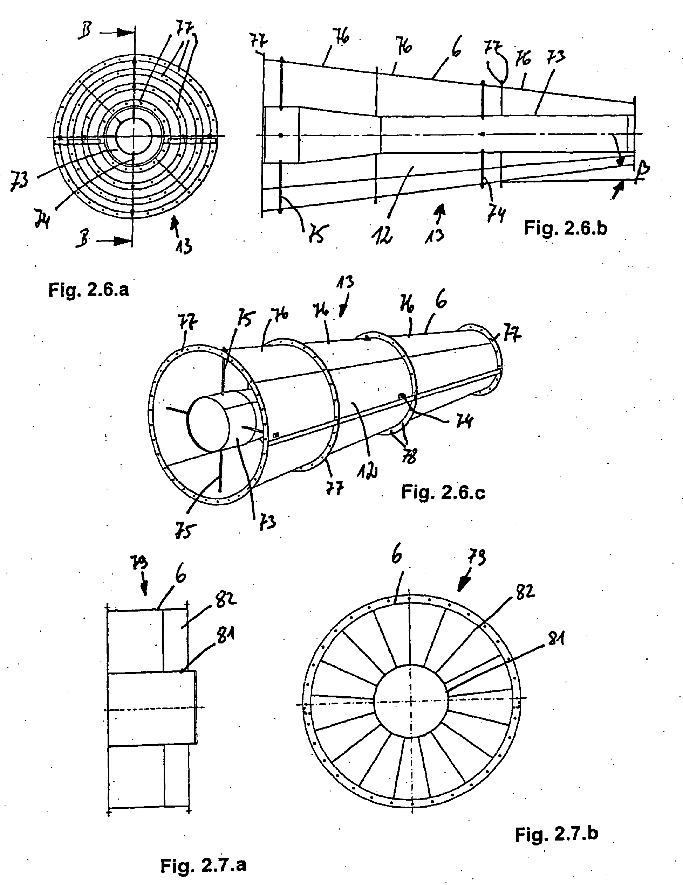

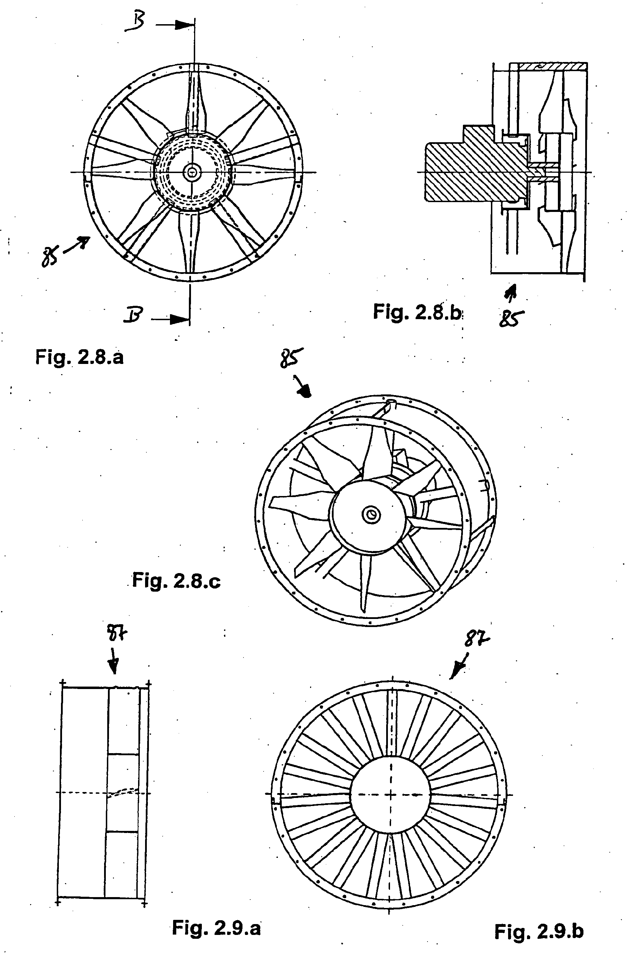

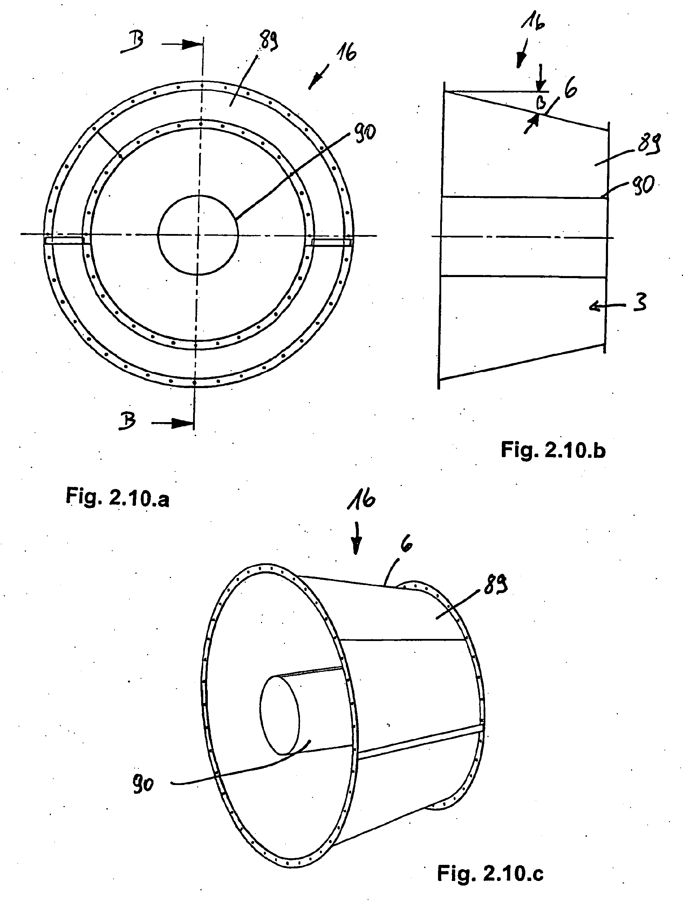

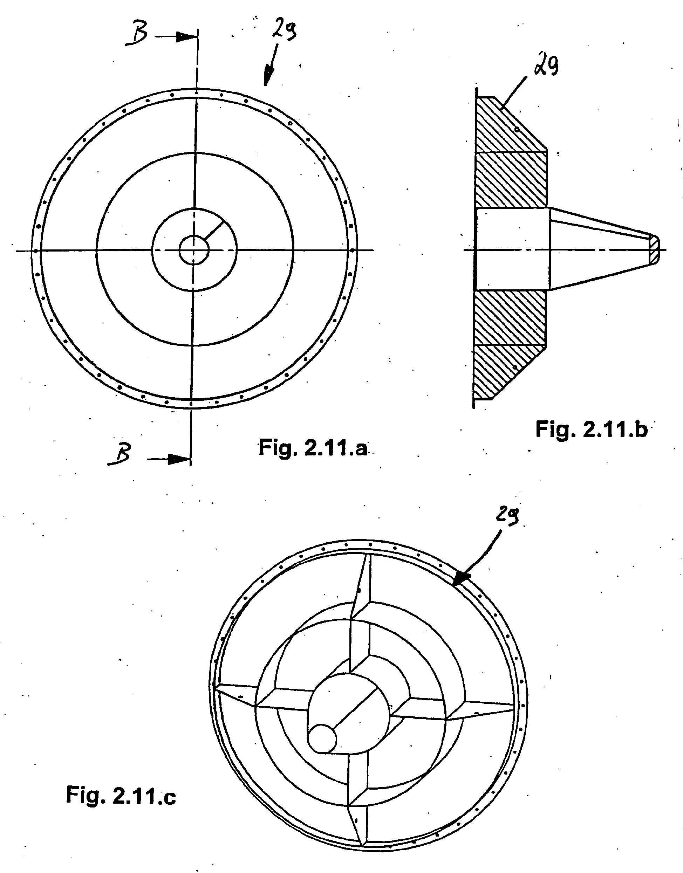

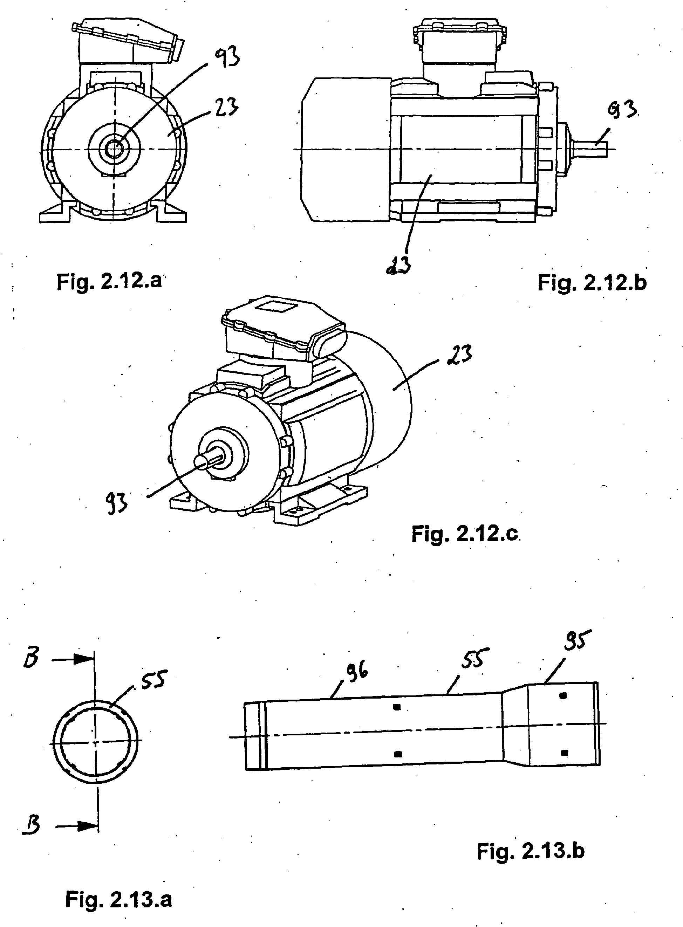

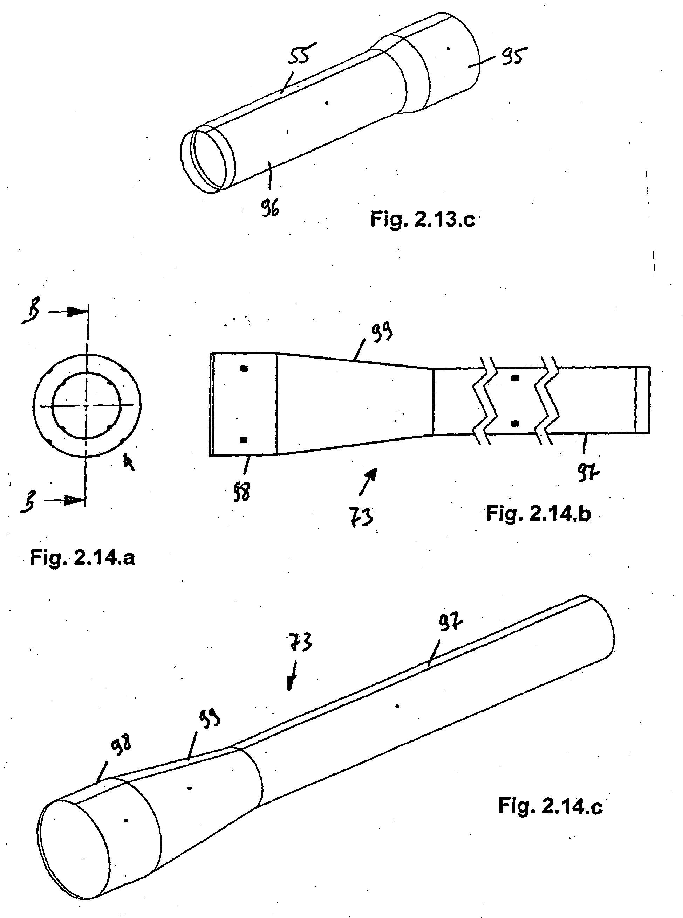

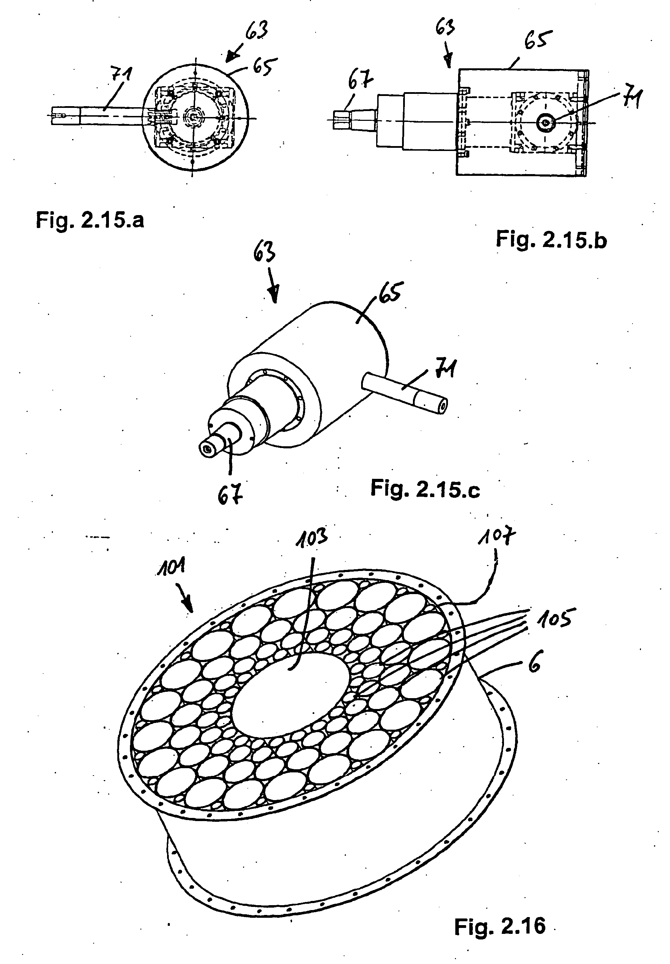

- - Figur 2.b: eine perspektivische Ansicht der erfindungsgemäßen Windkraftanlage gemäß Figuren 1.a, 1.b und 2.a;
- - Figur 2.1.a: eine Ausführungsform des Einlassbereichs der erfindungsgemäßen Windkraftanlage in Vorderansicht;
- - Figur 2.1.b: eine Schnittansicht gemäß der Linie B-B von Figur 2.1.a;
- - Figur 2.1.c: eine perspektivische Ansicht des Einlassbereichs der erfindungsgemäßen Windkraftanlage;
- - Figur 2.2.a: in Vorderansicht eine Ausführungsform der Beschleunigungseinrichtung im ersten Abschnitt des Strömungskanals;
- - Figur 2.2.b: eine Schnittansicht gemäß der Linie B-B von Figur 2.2.a;
- - Figur 2.2.c: die Beschleunigungseinrichtung von Figur 2.2.a in einer perspektivischen Ansicht;
- - Figur 2.3.a: ein Nachleitrad im ersten Abschnitt der erfindungsgemäßen Windkraftanlage in Schnittansicht;
- - Figur 2.3.b: das Nachleitrad von Figur 2.3.a in Vorderansicht;
- - Figur 2.4.a: den zweiten sich verjüngenden Abschnitt der erfindungsgemäßen Windkraftanlage in in Vorderansicht;
- - Figur 2.4.b: die Einlassdüse von Figur 2.4.a in Seitenansicht;
- - Figur 2.4.c: die Einlassdüse im zweiten Abschnitt perspektivischer Ansicht von der Seite des Einlasses her;
- - Figur 2.5.a: den dritten Abschnitt der erfindungsgemäßen Windkraftanlage in Ansicht der Einlassseite;
- - Figur 2.5.b: eine Schnittansicht des dritten Abschnitts gemäß Figur 2.5.a;
- - Figur 2.5.c: den dritten Abschnitt der erfindungsgemäßen Windkraftanlage in perspektivischer Ansicht von der Auslassseite her;
- - Figur 2.6.a: den vierten Abschnitt des Strömungskanals der erfindungsgemäßen Windkraftanlage von der Einlassseite her;
- - Figur 2.6.b: eine Schnittansicht gemäß der Linie B-B von Figur 2.6.a;
- - Figur 2.6.c: eine perspektivische Ansicht des vierten Abschnitts des Strömungskanals der erfindungsgemäßen Windkraftanlage von der Auslassseite des Abschnitts her;
- - Figur 2.7.a: eine Schnittansicht des Vorleitrades vor der Beschleunigungseinrichtung des fünften Abschnitts des Strömungskanals der erfindungsgemäßen Windkraftanlage;
- - Figur 2.7.b: in Frontansicht das Nachleitrad gemäß Figur 2.7.a;
- - Figur 2.8.a: eine Ansicht der Beschleunigungseinrichtung im fünften Abschnitt des Strömungskanals der erfindungsgemäßen Windkraftanlage, entsprechend jener von Figur 2.2.a;
- - Figur 2.8.b: eine Schnittansicht gemäß der Linie B-B von Figur 2.8.a;
- - Figur 2.8.c: eine perspektivische Ansicht der zweiten Beschleunigungseinrichtung im fünften Abschnitt des Strömungskanals der erfindungsgemäßen Wärmekraftanlage entsprechend der Darstellung von Figur 2.2.c;
- - Figur 2.9.a: eine Schnittansicht des Nachleitrades im fünften Abschnitt des Strömungskanals der erfindungsgemäßen Windkraftanlage;
- - Figur 2.9.b: eine Frontansicht des Nachleitrades gemäß Figur 2.9.a;
- - Figur 2.10.a: einen Auslassabschnitt im Anschluss an den fünften Abschnitt des Strömungskanals der erfindungsgemäßen Windkraftanlage in der Ansicht der Einlassseite;
- - Figur 2.10.b: eine Schnittansicht entlang der Linie B-B von Figur 2.10.a;
- - Figur 2.10.c: eine perspektivische Ansicht des Auslassabschnitts von Figur 2.10.a von der Auslassseite her;
- - Figur 2.11.a: den Auslassabschnitt des Strömungskanals der erfindungsgemäßen Windkraftanlage;
- - Figur 2.11.b: eine Schnittansicht entlang der Linie B-B von Figur 2.11.a;
- - Figur 2.11.c: eine perspektivische Ansicht des Endabschnitts gemäß Figur 2.11.a von der Auslassseite her;
- - Figur 2.12.a: eine Frontansicht auf den Generator 23 zur Stromerzeugung;
- - Figur 2.12.b: eine Seitenansicht des Stromgenerators von Figur 2.12.a;
- - Figur 2.12.c: eine perspektivische Ansicht des Stromgenerators von Figur 2.12.a
- - Figur 2.13.a: ein Innenrohr, in Frontansicht von der Einlassseite her, das sich von dem ersten Abschnitt durch den zweiten Abschnitt zum dritten Abschnitt des Strömungskanals der erfindungsgemäßen Windkraftanlage erstreckt;
- - Figur 2.13.b: eine Seitenansicht des Innenrohrs von Figur 2.13.a;
- - Figur 2.13.c: eine perspektivische Seitenansicht des Innenrohrs von Figur 2.13.a von der Seite des dritten Abschnitts des Strömungskanals her;
- - Figur 2.14.a: eine Frontansicht des Innenrohres, das sich vom dritten Abschnitt durch den vierten Abschnitt zum fünften Abschnitt des Strömungskanals der erfindungsgemäßen Windkraftanlage erstreckt;
- - Figur 2.14.b: eine verkürzte Seitenansicht des Innenrohres von Figur 2.14.a;
- - Figur 2.14.c: eine perspektivische Ansicht des Innenrohres von Figur 2.14.a von der Seite des fünften Abschnitts her;
- - Figur 2.15.a: eine Frontansicht des Getriebes im dritten Abschnitt des Strömungskanals der erfindungsgemäßen Wärmekraftanlage mit sich seitlich wegerstreckender Abtriebswelle;
- - Figur 2.15.b: eine Seitensicht des Getriebes von Figur 2.15.a;
- - Figur 2.15.c: eine perspektivische Ansicht des Getriebes von Figur 2.15.a von der Rotorseite her;
- - Figur 2.16.a: eine perspektivische Ansicht einer Parallelrohr-Einrichtung zur weiteren Beruhigung der Strömung;

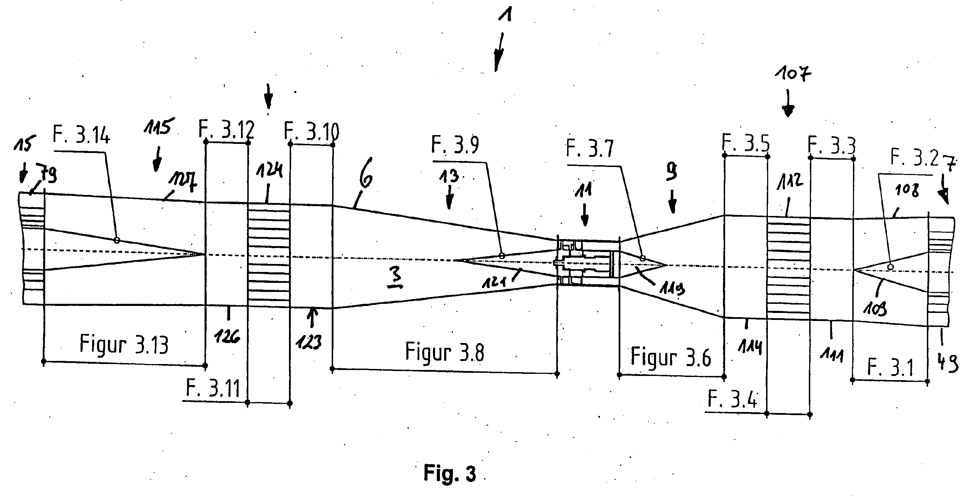

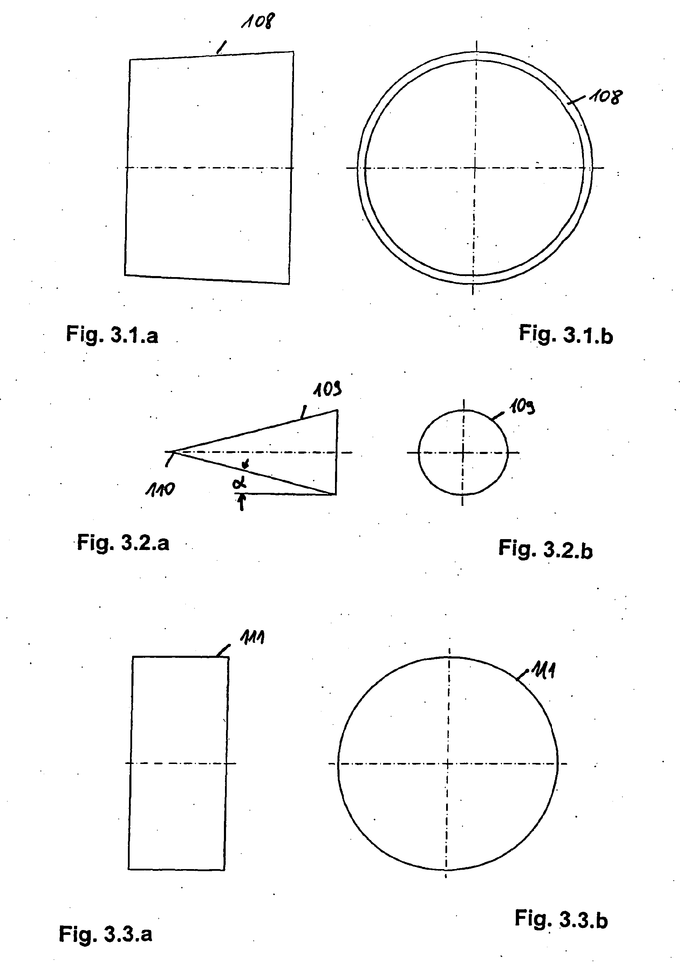

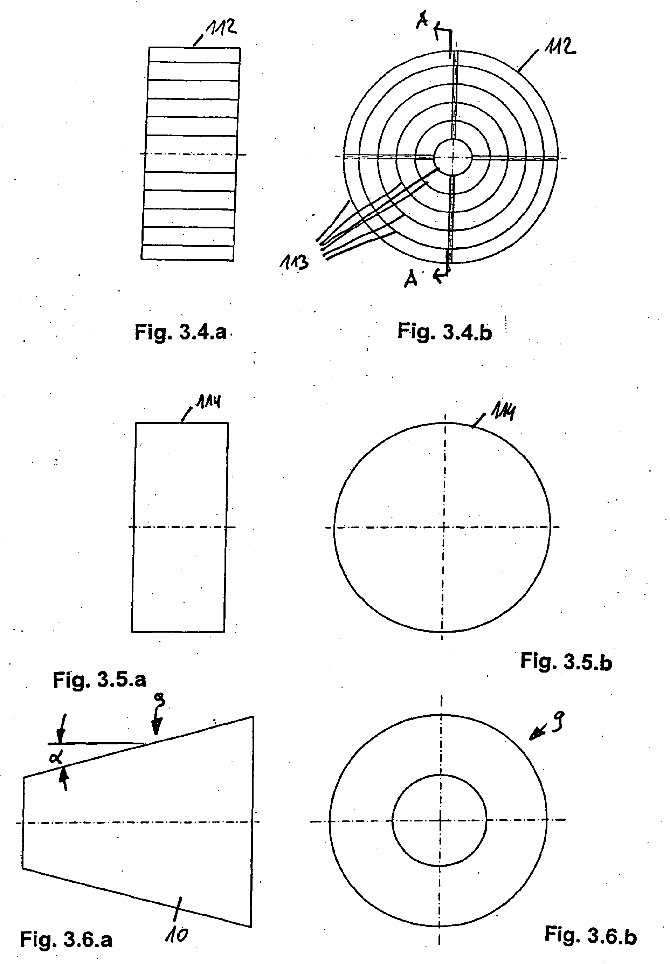

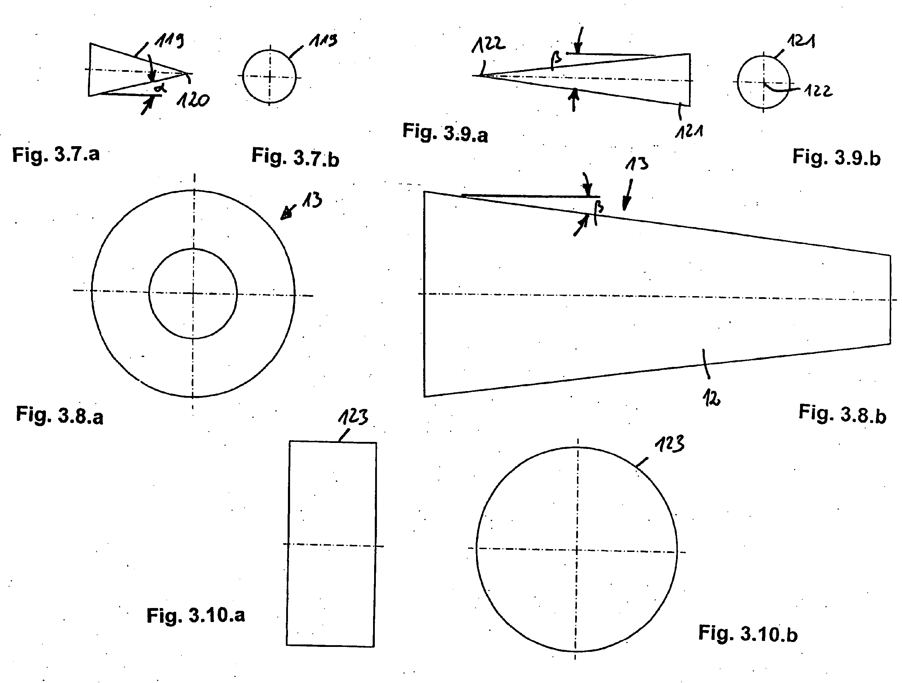

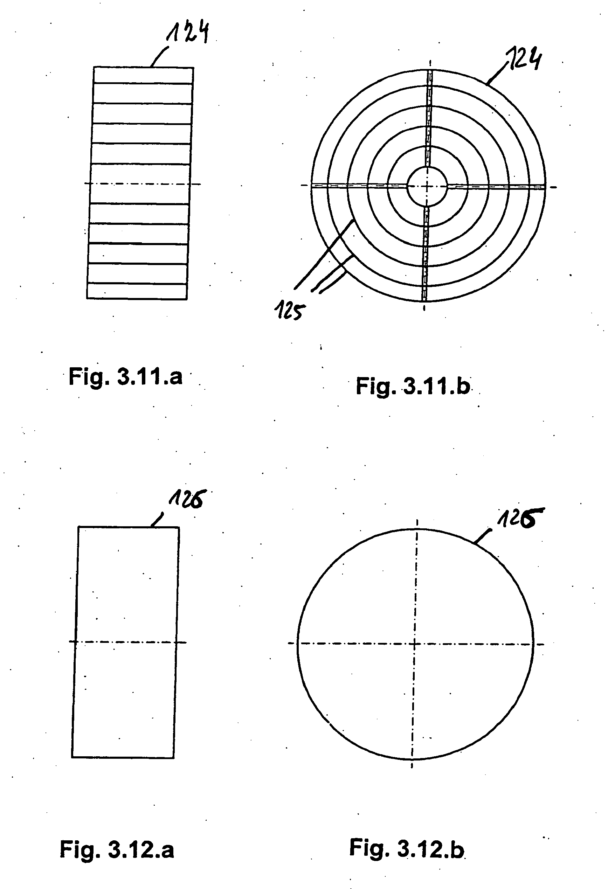

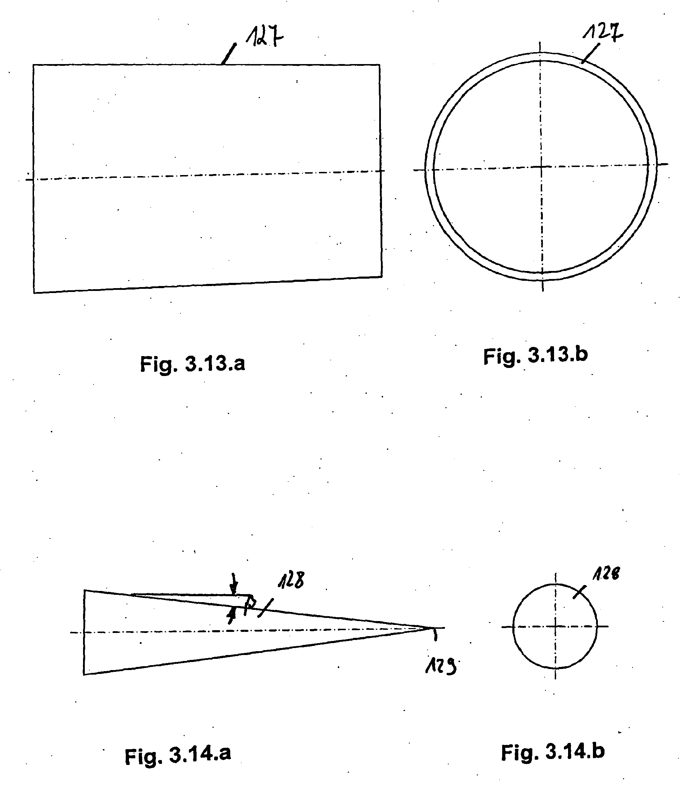

- - Figur 3: eine Prinzip- Schnittansicht einer zweiten Ausführungsform der erfindungsgemäßen Windkraftanlage in verkürzter Darstellung ohne Einlassabschnitt und Auslassabschnitt;
- - Figur 3.1.a: in Seitenansicht die äußere Umfangshülle des Abschnitts hinter dem Nachleitrad im ersten Abschnitt des Strömungskanal der erfindungsgemäßen Windkraftanlage;
- - Figur 3.1.b: eine Vorderansicht des Hüllenabschnitts von Figur 3.1.a;
- - Figur 3.2.a: einen Verjüngungsabschnitt in Seitenansicht, der sich innerhalb des Hüllenabschnitts von Figur 3.1.a befindet;
- - Figur 3.2.b: eine Frontansicht des Verjüngungsabschnitts von Figur 3.2.a;
- - Figur 3.3.a: einen Hüllrohrabschnitt vor dem zweiten Abschnitt des Strömungskanals der zweiten Ausführungsform der erfindungsgemäßen Windkraftanlage;
- - Figur 3.3.b: eine Vorderansicht des Rohrabschnitts von Figur 3.3.a;
- - Figur 3.4.a: eine Schnittansicht eines Rohrabschnitts mit konzentrisch angeordneten Rohren;
- - Figur 3.4.b: eine Frontansicht des Rohrabschnitts von Figur 3.4.a;
- - Figur 3.5.a: einen Rohrabschnitt ähnlich zu jenem von Figur 3.3.a;
- - Figur 3.5.b: eine Frontansicht des Rohrabschnitts von Figur 3.5.a;
- - Figur 3.6.a: den zweiten Abschnitt des Strömungskanals in Form eines sich verjüngenden Abschnitts;
- - Figur 3.6.b: eine Frontansicht des Rohrabschnitts von Figur 3.6.a;
- - Figur 3.7.a: eine Seitenansicht des Aufweitungsabschnitts im zweiten Abschnitt des Strömungskanals;
- - Figur 3.7.b: eine Frontansicht des Abschnitts von Figur 3.7.a von der linken Seite;
- - Figur 3.8.a: eine Frontansicht des dritten Abschnitts des Strömungskanals in Form eines sich aufweitenden Abschnitts von der Einlassseite her;
- - Figur 3.8.b: den dritten Abschnitt des Strömungskanals von Figur 3.8.a in Seiten- ansicht;
- - Figur 3.9.a: eine Seitenansicht eines Verjüngungsabschnitts in Form eines Kegels im vierten Abschnitt des Strömungskanals;
- - Figur 3.9.b: eine Frontansicht auf den Kegel von Figur 3.9.a;
- - Figur 3.10.a: eine Seitenansicht eines Rohrabschnitts ähnlich zu jenem von Figur 3.5.a;
- - Figur 3.10.b: eine Frontansicht des Rohrabschnitts von Figur 3.10.a;
- - Figur 3.11.a: eine Schnittansicht eines Rohrabschnitts mit einer Mehrzahl von kon- zentrischen Rohren;
- - Figur 3.11.b: den Rohrabschnitt von Figur 3.11.a in Frontansicht;
- - Figur 3.12.a: einen Rohrabschnitt nach dem Rohrabschnitt gemäß Figur 3.11.a in Seitenansicht;
- - Figur 3.12.b: den Rohrabschnitt von Figur 3.12.a in Frontansicht;
- - Figur 3.13.a: einen weiteren leicht konischen Rohrabschnitt im fünften Abschnitt des Strömungskanals;
- - Figur 3.13.b: eine Frontansicht von der Einlassseite des Rohrabschnitts gemäß Figur 3.13.a;
- - Figur 3.14.a: einen Aufweitungsabschnitt, welcher im Rohrabschnitt 3.13.a angeordnet ist, in Seitenansicht;
- - Figur 3.14.b: eine Frontansicht des Aufweitungsabschnitts von Figur 3.14.a von der linken Seite dieser Figur gesehen;

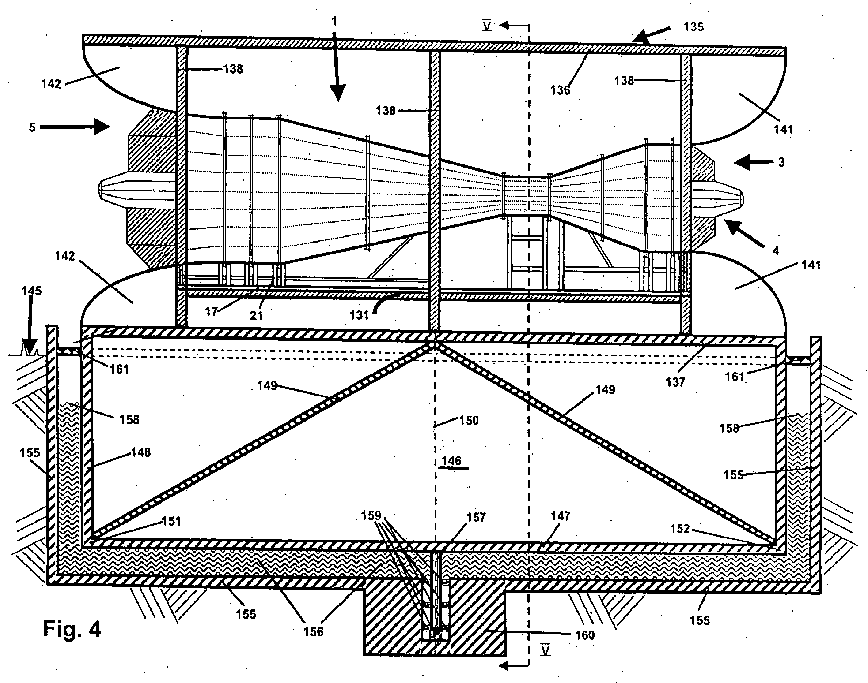

- - Figur 4: die erfindungsgemäße Windkraftanlage gemäß der ersten Ausführungsform in einem Gestell auf einem drehbar gelagerten Auftriebskörper, der in einem mit Wasser gefüllten Bassin schwimmt, in Seitenlängsschnittansicht;

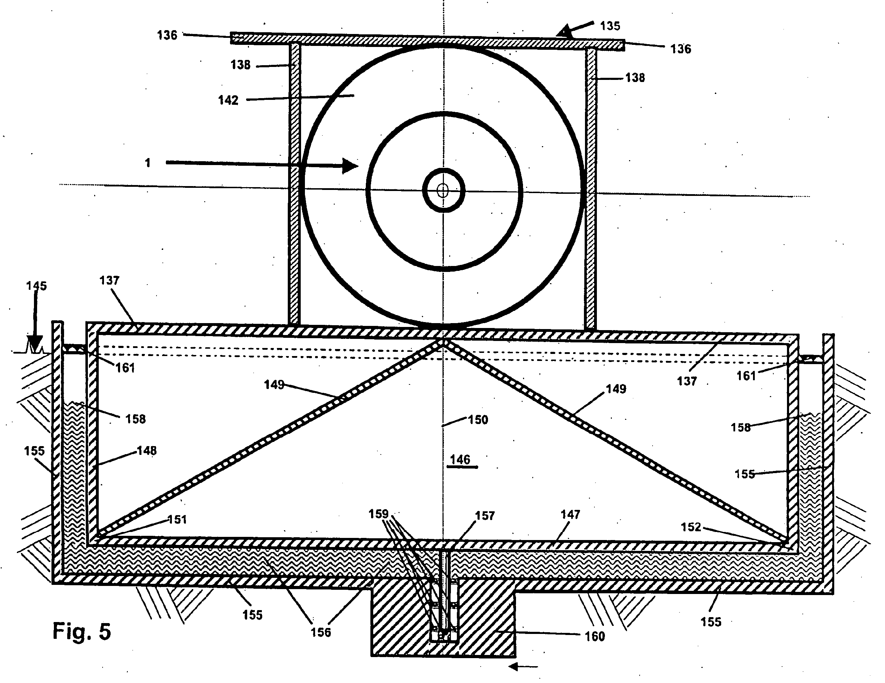

- - Figur 5: eine Schnittansicht gemäßer der Linie V-V von Figur 4;

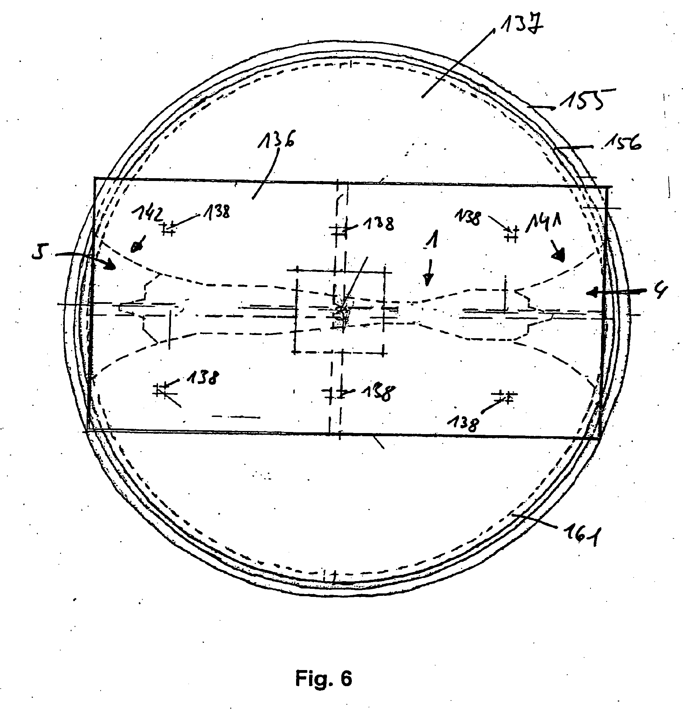

- - Figur 6: eine Draufsicht auf die Windkraftanlage mit Gestell gemäß Figur 4;

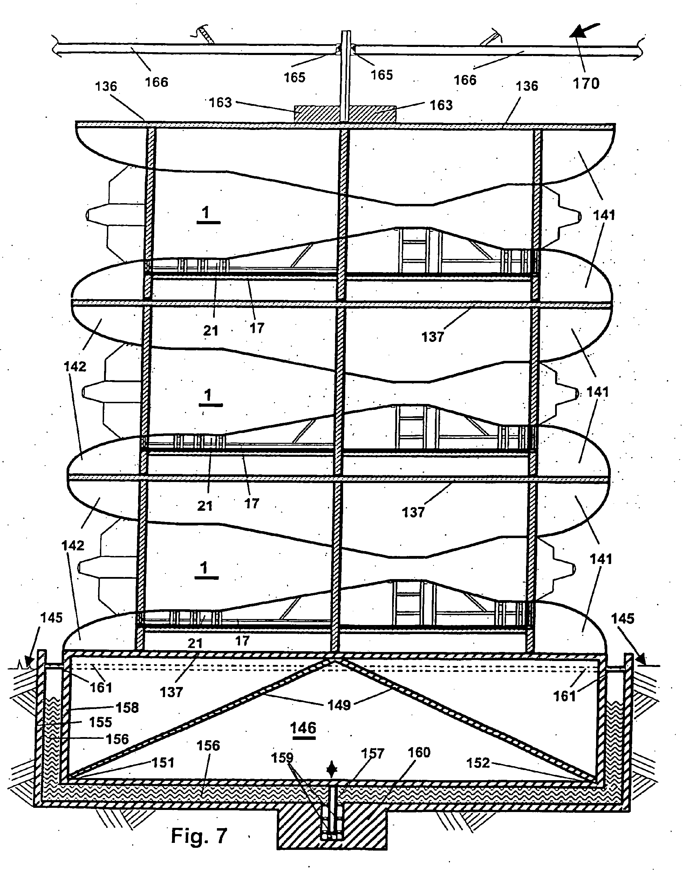

- - Figur 7: eine Längsschnittansicht eines erfindungsgemäßen Windkraftanlagensystems mit übereinander und nebeneinander geordneten Windkraftanlagen gemäß der ersten Ausführungsform;

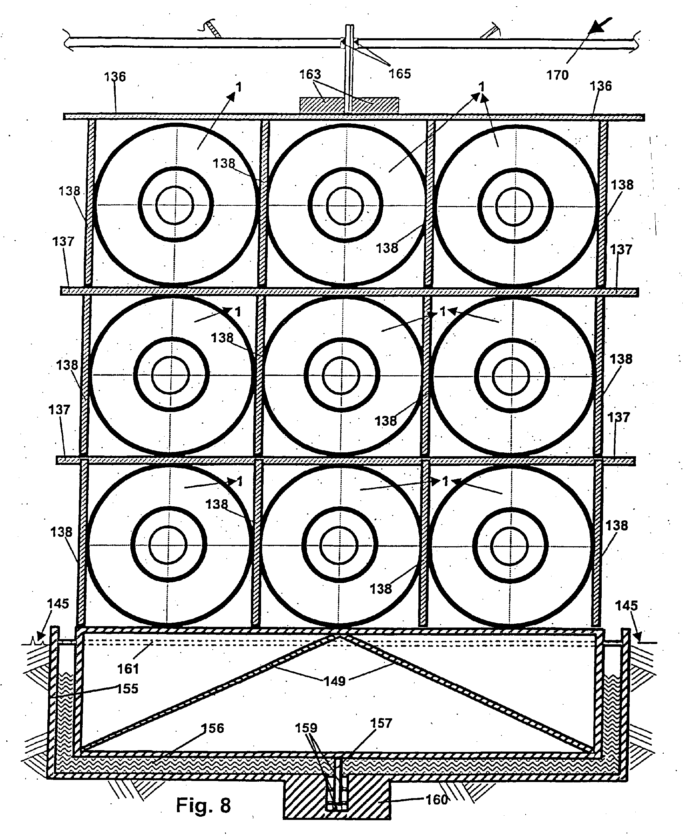

- - Figur 8: eine Seitenansicht des Windkraftanlagensystems von Figur 7;

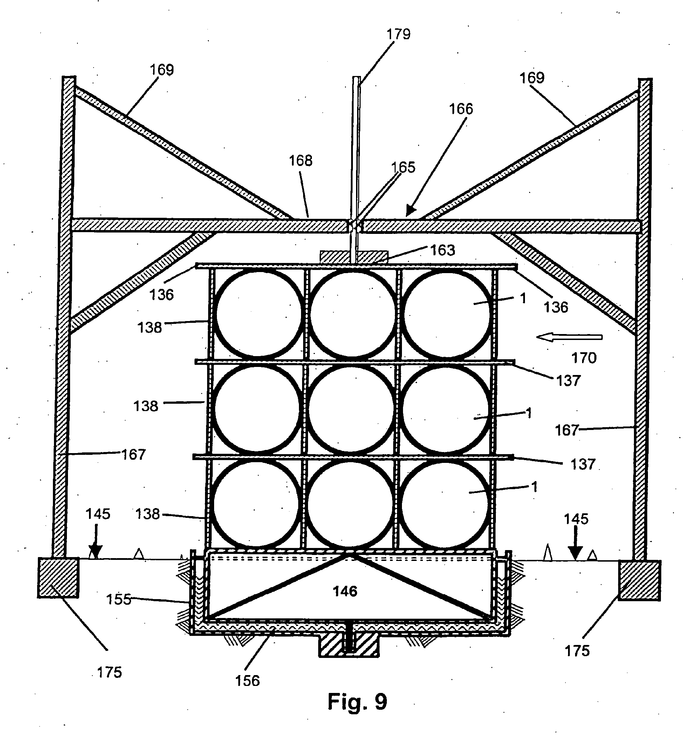

- - Figur 9: eine weitere Ausführungsform des erfindungsgemäßen Windkraftanlagensystems mit oberer Drehlagerung;

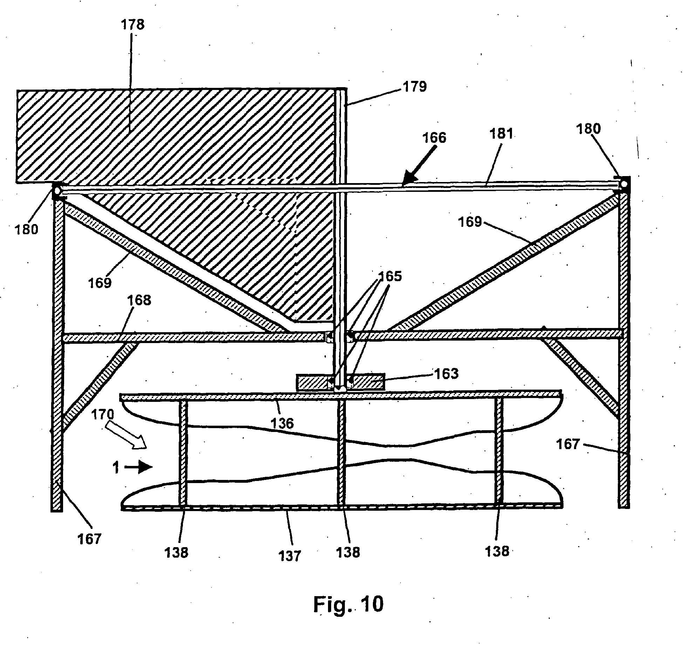

- - Figur 10: eine Seitenansicht der erfindungsgemäßen Ausführungsform gemäß Figur 9 des Windkraftanlagensystems, mit Segel;

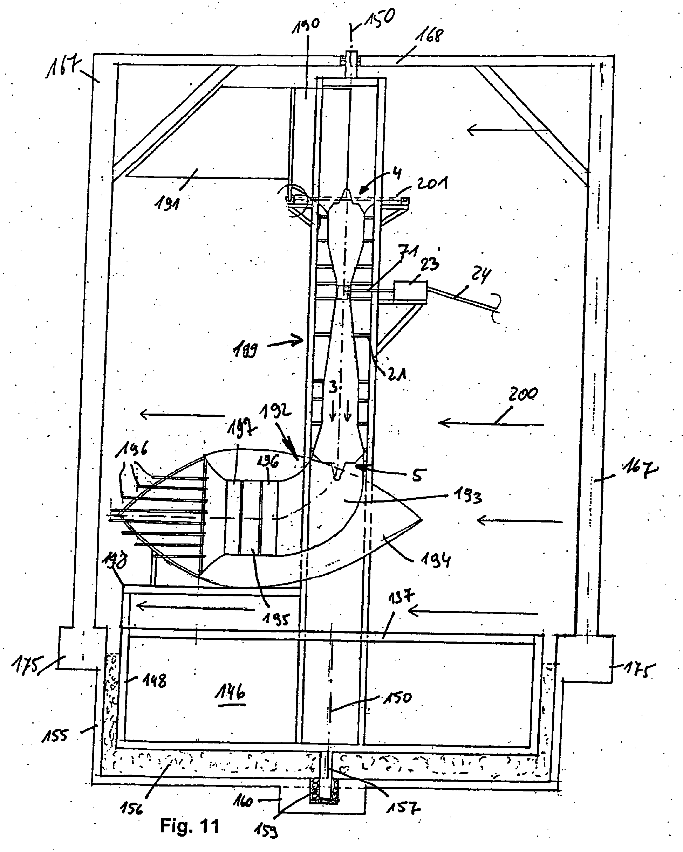

- - Figur 11: eine schematische Teilschnittansicht einer dritten Ausführungsform der erfindungsgemäßen Windkraftanlage;

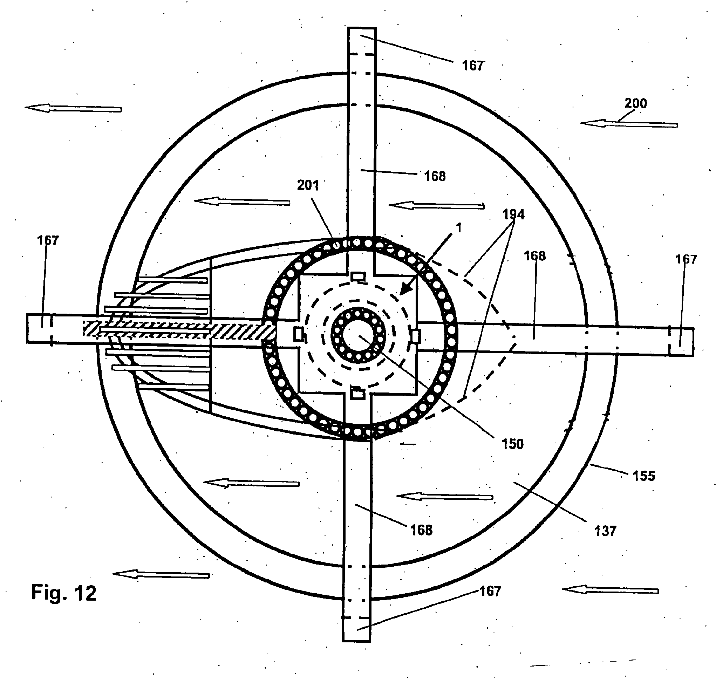

- - Figur 12: eine Draufsicht auf die Windkraftanlage gemäß Figur 11;

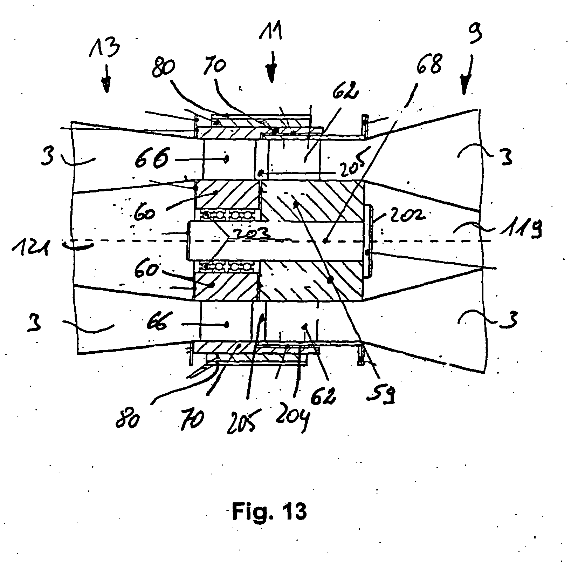

- - Figur 13: eine Schnittansicht einer erfindungsgemäßen Rotor- Getriebevorrichtung gemäß der vorliegenden Erfindung; und

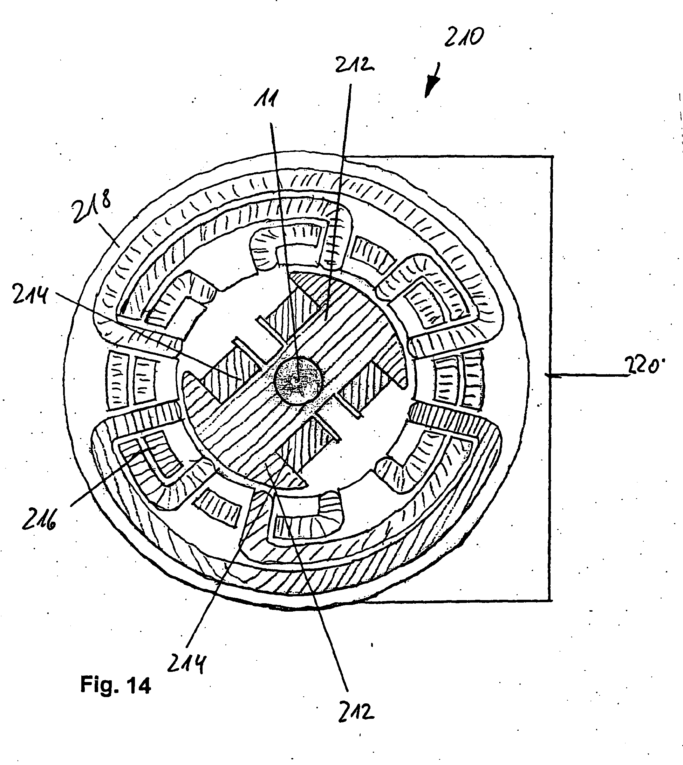

- - Figur 14: eine prinzipielle schematische Darstellung eines Genarator gemäß der vorliegenden Erfindung.

In den Figuren sind gleiche Elemente mit den gleichen Bezugsziffern bezeichnet.

In Figur 1.a ist eine erste Ausführungsform einer erfindungsgemäßen Windkraftanlage 1 in Seitenansicht dargestellt. Die Windkraftanlage 1, die zur Erzeugung von elektrischer Energie mittels bewegter Umgebungsluft dient, weist einen sie durchquerenden Strömungskanal 3 auf. Der Strömungskanal 3 erstreckt sich von einer Einlassseite 4 zu einer Auslassseite 5.

Die erfindungsgemäße Windkraftanlage weist eine Mehrzahl von Abschnitten auf: einen ersten Abschnitt 7, einen zweiten Abschnitt 9, einen dritten Abschnitt 11, einen vierten Abschnitt 13 und einen fünften Abschnitt 15. Die einzelnen Abschnitte werden nachfolgend näher beschrieben werden.

An den fünften Abschnitt 15 schließt sich ein weiterer sechster Abschnitt 16 an, mit dem der in den ersten Abschnitt 1 eingebrachte Luftstrom wieder an die Umgebung ausgebracht wird.

In der in Figur 1.a dargestellten einfachen Ausgestaltung der Windkraftanlage 1, steht diese auf einer Plattform bzw. einem Rahmen 17, der sich seinerseits auf Füßen 19 abstützt. Wie weiterhin aus Figur 1.a ersichtlich wir die im Wesentlichen im Querschnitt kreisförmige Windkraftanlage 1 mittels eines Gestells 21 auf dem Rahmen 17 abgestützt. Die Ausbildung des Gestells bedarf keiner weiteren Erläuterung, da der Durchschnittsfachmann selbstverständlich in der Lage ist, einen rohrförmigen Körper auf einem ebenen Rahmen abzustützen.

Weiterhin ist aus Figur 1.a, die eine erste Ausführungsform der vorliegenden Erfindung darstellt, ein Generator 23 ersichtlich, mit der der elektrische Strom erzeugt wird.

In Figur 1.b ist in Draufsicht die erste Ausführungsform der Windkraftanlage 1, die in Seitenansicht in Figur 1.a dargestellt ist, dargestellt. Wie sich in Zusammenschau der Figuren 1.a und 1.b ergibt, weist der erste Abschnitt 7 einen im Wesentlichen konstanten Außendurchmesser seiner Außenhülle 6 des Strömungskanals 3 auf. Daran schließt sich der zweite Abschnitt 9, der sich von dem ersten Abschnitt 7 aus verjüngt. Er ist somit als ein sich verjüngender Abschnitt ausgebildet. An den zweiten Abschnitt 9 schließt sich ein dritter Abschnitt 11 an, der einen im Wesentlichen konstanten Querschnitt aufweist, und in dem ein Rotor angeordnet ist, der durch den eingeleiteten Luftstrom in Drehungen versetzt wird. Die genauere Ausgestaltung des Rotors wird nachfolgend detailliert beschrieben werden.

An den dritten Abschnitt 11 schließt sich der vierte Abschnitt 13 an, der in Form einer Rohrerweiterung und besonders vorteilhaft in Form eines sich aufweitenden Abschnitts ausgebildet ist. Der sich daran anschließende fünfte Abschnitt 15 weist wiederum einen im Wesentlichen konstanten Querschnitt auf. Der sechste Abschnitt 16, der sich an den fünften Abschnitt 15 anschließt, öffnet sich trichterförmig, wie weiter unter näher beschrieben werden wird.

Vor dem ersten Abschnitt 7 auf der Einlassseite 4 befindet sich eine Luftleiteinrichtung 27, die die Aufgabe hat, den einströmenden Luftstrom, der Turbulenzen und Verwirbelungen aufweisen kann, in eine laminare Strömung überzuführen.

Anschließend an den sechsten Abschnitt 16 befindet sich an der Auslassseite 5 ebenfalls eine Luftleiteinrichtung 29, die dazu dient, den ausströmenden Luftstrom ebenfalls so laminar wie möglich in die Umgebung abzugeben, was eine besonders vorteilhafte Ausbringung des durchströmenden Luftstroms in die Umgebung schafft.

Es wird nunmehr Bezug genommen auf die Figur 2.a in der die erste Ausführungsform der erfindungsgemäßen Windkraftanlage 1 im Schnitt dargestellt ist. In Figur 2.a sind die einzelnen Abschnitte auch bezeichnet mit Figur 2.1 bis F2.17, die darauf hinweisen sollen, dass die jeweiligen Abschnitte in den zugehörigen Figuren näher dargestellt sind, wobei der Begriff "Figur" gleichbedeutend ist mit der Abkürzung "F.". Die einzelnen Abschnitte der Figur 2.1 bis F.2.17 werden nachfolgend detailliert unter Bezugnahme auf die jeweiligen Figuren beschrieben. Dabei sind die einzelnen Abschnitte jeweils in mehreren Einzeldarstellungen aus verschiedenen Ansichten aufgeteilt, so gibt es zum Beispiel für die Figur 2.1 die Darstellungen Figur 2.1.a, Figur 2.1.b und Figur 2.1.c, also drei Darstellungen des mit Figur 2.1. bezeichneten Abschnitts.

Figur 2.b zeigt die erfindungsgemäße Windkraftanlage 1 gemäß der ersten Ausführungsform in perspektivischer Darstellung zur räumlichen Darstellung der Windkraftanlage 1.

Es wird nunmehr Bezug genommen auf die Figuren 2.1.a bis Figur 2.1.c.

In Figur 2.1.a ist eine Vorderansicht der Luftleiteinrichtung 27 dargestellt, in Figur 2.1.b ist eine Schnittansicht entlang der Linie B-B von Figur 2.1.a und in Figur 2.1.c ist die Luftleiteinrichtung 27 in perspektivischer Darstellung dargestellt.

Luftleiteinrichtung 27 weist einen Mittenkonus 29 auf, der sich von einem vorderen kreisförmigen Vorderabschnitt 30 aufweitet und an den sich ein Rohrabschnitt 32 anschließt. Konzentrisch um den Rohrabschnitt 32 erstreckt sich ein Rohrabschnitt 33, der zur Gleichrichtung des Eingangsluftstroms dient, und der mittels Befestigungsflügeln 34 mit dem Rohrabschnitt 32 verbunden ist. Die Flügel 34 erstrecken sich in Umfangsrichtung weiter von dem Rohrabschnitt 32 weg und stehen in Verbindung mit einem Rohrflansch 35, der einen konzentrischen Rohrabschnitt 36 und einen Flansch 37 aufweist, der Bohrungen 38 aufweist, durch die entsprechende Befestigungsmittel einsetzbar sind, zur Verbindung mit dem ersten Abschnitt 7 des Strömungskanals 3. In Figur 2.1.b ist der Einlassabschnitt im Schnitt gemäß Linie B-B von Figur 2.1.a im Schnitt dargestellt.

Es wird darauf hingewiesen, dass derartige Befestigungsmittel eine übliche Verbindung von Rohrabschnitten darstellen und bei allen einzelnen Rohrabschnittselementen vorhanden sind. Sie werden deshalb nachfolgend nicht mehr bei jedem einzelnen Rohrelement beschrieben.

In den Figuren 2.2.a bis 2.2.c ist eine erste Beschleunigungseinrichtung 39 dargestellt. Die Beschleunigungseinrichtung 39 ist in Form eines Ventilators ausgebildet.

Wie aus Figur 2.2.b ersichtlich, werden Ventilatorschaufeln 40 mittels eines Motors 41 in Drehung versetzt und erzeugen einen Unterdruck bzw. Sog, der zum Beschleunigen des einströmenden Luftstroms dient.

Der Ventilator 39 wird auf geeignete Weise mittels zweier Flansche 42 im ersten Abschnitt 7 befestigt. Der Motor 41 ist mittels Streben 43 mit Längshaltern 44 verbunden, die zur Lagesicherung des Motors 41 und damit der Ventilatorschaufeln 40 dienen, die um einen Lagerring 45 angeordnet sind. Weitere Längsstreben 46 dienen zur Stabilisierung der ersten Beschleunigungseinrichtung 39.

In den Figuren 2.3.a und 2.3.b ist im Schnitt und in der Vorderansicht eine Luftströmungsleiteinrichtung 49 dargestellt. Diese dient zur Beruhigung der von der Luftbeschleunigungseinrichtung verwirbelten Luftströmung und zur Erzeugung einer laminaren Luftströmung in dem ersten Abschnitt 7 des Strömungskanals 3. In der in den Figuren 2.3.a und 2.3.b dargestellten Ausführungsbeispielen ist die Lüftströmungsleiteinrichtung 49 als Nachleitrad 50 ausgebildet, das einen Mittenring 51, einen Befestigungsflansch 52 und sternförmig angeordnete Schaufeln 53 aufweist. Durch die sternförmig angeordneten Schaufeln 53 wird der verwirbelte und turbulente Luftstrom in eine laminare Strömung überführt.

In Figur 2.4.a ist in Frontansicht der zweite Abschnitt 9 dargestellt, der hier als Venturi-Düse10 bezeichneter Abschnitt ausgebildet ist. In Figur 2.4.b ist diese Venturi-Düse in Schnittansicht gemäß Linie B-B von 4.2.4.a dargestellt. Wie insbesondere aus Figur 2.4.b ersichtlich, verengt sich die Außenhülle 6 des Strömungskanals von einem Eingangsquerschnitt zu einem Ausgangsquerschnitt unter einem bestimmten Winkel α. Der Winkel α sollte 15° oder kleiner sein, damit eine Venturi-Düse ausgebildet wird. Die Außenhülle 6 ist um ein Innenrohr 55 angebracht, wobei zur gegenseitigen Lagerung vier am Umfang verteilte Streben 56 und 57 im axialen Abstand des Innenrohrs voneinander angeordnet sind und die Außenhülle 6 bzgl. des Innenrohres 55 lagern.

Durch die sich verengende Außenhülle 6 wird der einströmende Luftstrom in bekannter Weise beschleunigt, wie das deutlich auch aus Figur 2.4.c ersichtlich ist, die eine perspektivische Ansicht des zweiten Abschnitts 9, der Venturi-Düse 10 zeigt.

Nach Beschleunigung des Luftstroms in dem zweiten Abschnitt 9 trifft dieser auf den dritten Abschnitt 11, der in den Figuren 2.5.a bis 2.5.c dargestellt ist. Wie insbesondere aus Figur 2.5.b, der eine Schnittansicht gemäß der Linie B-B von Figur 2.5.a ist, ersichtlich, ist in dem dritten Abschnitt 11 eine Art Turbine 25 angeordnet, die eine Lagereinrichtung 59 und einen Propeller oder Rotor 60 aufweist. Die Lagereinrichtung 59 weist eine Lagerbuchse 61 auf, an der Lagerplatten 62 angeordnet sind, die sich radial von der Lagerbuse 61 nach außen erstrecken und in Verbindung mit der Außenhülle 6 stehen. Wie aus den Figuren 2.5.b und 2.5.c deutlich ersichtlich, weist der dritte Abschnitt 11 einen konstanten Querschnitt auf. In der Lagerbuchse 61 ist ein Getriebe 63 gelagert, welches herkömmlicher Bauart sein kann und weiter unten näher, unter Bezugnahme auf die Figuren 2.15.a bis 2.15.c, beschrieben wird.

Das Getriebe 63 ist einem Rohrabschnitt 64 gelagert und weist eine Drehwelle 67 auf, um die der Rotor 60 gelagert ist.

Der Rotor weist Schaufeln 69 auf, die den durchströmenden Luftstrom ablenken und dabei in Drehung versetzt werden, wodurch die Drehwelle 67 in Drehung versetzt wird. Über eine sogenannte Königswelle steht eine Abtriebswelle 71 in Verbindung, die durch die Drehwelle entsprechend angetrieben wird und mit dem Generator 23 (vergleiche Figuren 1.a, 1.b und 2.b) in Verbindung steht. Durch Antreiben des Generators 23 wird entsprechend Strom erzeugt.

An den dritten Abschnitt 11 schließt sich der vierte Abschnitt 13, der in den Figuren 2.6.a bis 2.6.c näher dargestellt ist. Figur 2.6.a zeigt den vierten Abschnitt 13 in Frontansicht, gesehen von der Einlassseite, dessen Einlassquerschnitt im Wesentlichen dem Querschnitt der Auslassseite des dritten Abschnitts 11 entspricht. Wie insbesondere aus den Figuren 2.6.b und 2.6.c ersichtlich, weitet sich der vierte Abschnitt 13 von dem Einlassquerschnitt unter einem Winkel β auf und bildet einen hier als Laval-Duse 12 bezeichneter Abschnitts, insbesondere wehn der Winkel β 7° oder kleiner beträgt. Diese ist ähnlich wie die Venturi-Düse 10 aufgebaut und weist ein Innenrohr 73 auf, dessen Querschnitt zur Auslassseite des vierten Abschnitts 13 sich ebenfalls vergrößert. Ähnlich wie der zweite Abschnitt 9 ist die Außenhülle 6 mit dem Innenrohr 73 über entsprechende Streben 74 und 75 verbunden. Die Aufweitung des vierten Abschnitts 13 erfolgt unter dem Winkel β von gleich oder kleiner 7°, wodurch Strömungsabrisse vermieden werden. Der vierte Abschnitt 13 ist, wie insbesondere aus den Figuren 2.6.b und 2.6.c ersichtlich aus drei Rohrstücken 76 aufgebaut, die jeweils an den beiden Stirnseiten ringförmige Flansche 77 aufweisen, die eine Vielzahl von Bohrungen 78 aufweist durch die in an sich bekannter Weise entsprechenden Befestigungseinrichtung gesteckt werden können, wodurch die Rohrstücke 76 miteinander verbunden werden können.

In den Figuren 2.7.a und 2.7.b ist eine weitere Strömungsleiteinrichtung 79 in Schnittansicht und in Frontansicht, gesehen von der Einlassseite, dargestellt. Die Strömungsleiteinrichtung 79, auch Vorleitrad genannt, weist einen zentralen Rohrabschnitt 81 und von diesem sich radial zu der Außenhülle 6 erstreckende Luftleitschaufeln 82 auf, mittels derer der durchströmende Luftstrom weiter beruhigt wird, um eine laminare Strömung des Luftstroms sicherzustellen.

Die Strömungsleiteinrichtung 79 bildet einen Eingangsabschnitt des fünften Abschnitts 15, an den sich eine zweite Beschleunigungseinrichtung 85 anschließt, die in den Figuren 2.8.a bis 2.8.c dargestellt ist. Der Aufbau der zweiten Beschleunigungseinrichtung 85 entspricht im Wesentlichen dem Aufbau der ersten Beschleunigungseinrichtung 39, die in den Figuren 2.2.a bis 2.2.b beschrieben ist, so dass eine weitere detaillierte Beschreibung der zweiten Beschleunigungseinrichtung 85 entfallen kann. Gleiches gilt für die im fünften Abschnitt 15 nachfolgende Luftströmungsleiteinrichtung 49, die in den Figuren 2.3.a und 2.3.b dargestellt und unter deren Bezugnahme beschrieben ist, so dass eine weitere detaillierte Beschreibung der Luftströmungsleiteinrichtung 87 entbehrlich ist.

An den im Wesentlichen mit konstantem Querschnitt versehenen fünften Abschnitt 15 (vergleiche Figuren 1.a bis 2.b) schließt sich ein sechster Abschnitt 16 an, der in den Figuren 2.10.a bis 2.10.c dargestellt ist. Wie ersichtlich, handelt es sich um ein sich aufweitendes Rohrstück 89, mit einem Innenrohr 90 und der Außenhülle 6 des Strömungskanals 3. Durch das Rohrstück 89 wird der durchströmende Luftstrom aufgrund der Aufweitung stark verlangsamt, weil beispielsweise bei einer Verdoppelung der Fläche, sich die Strömungsgeschwindigkeit halbiert. Der Grad der Aufweitung beträgt vorzugsweise die Neigung gemäß dem oben definierten Winkel β.

In den Figuren 2.11.a bis 2.11.c ist die Luftleiteinrichtung 29 in Vorderansicht, Schnittansicht gemäß Linie B-B und in perspektivischer Ansicht dargestellt. Sie entspricht in ihrem Aufbau der Luftleiteinrichtung 27, die in den Figuren 2.1.a bis 2.1.c dargestellt ist und oben beschrieben ist. Abgesehen davon, dass die Luftleiteinrichtung 29 an den Ausgangsquerschnitt des Rohrstücks 89 angepasst ist, weist sie den identischen Aufbau wie die Luftleiteinrichtung 27 auf und wird deshalb hier nicht weiter beschrieben.

In den Figuren 2.12.a bis 2.12.c ist der Generator 23 dargestellt. Der Generator 23 ist auf herkömmliche Weise aufgebaut und weist eine Eingangswelle 93 auf, die mit der Abtriebswelle 71 (vergleiche Figur 2.5.a und 2.5.c) verbindbar ist.

In den Figuren 2.13.a bis 2.13.c ist in Vorderansicht, Seitenansicht und perspektivischer Ansicht, das Innenrohr 55 des zweiten Abschnitts 9, also der Venturi-Düse, einzeln dargestellt. Es weist einen Eingangsrohrabschnitt 95 und einen Ausgangsrohrabschnitt 96 auf, wobei der Eingangsrohrabschnitt einen gegenüber dem Ausgangsrohrabschnitt größeren Querschnitt aufweist.

In den Figuren 2.14.a bis 2.14.c ist das Innenrohr 73 des vierten Abschnitts 13, also der Laval-Düse 12, einzeln in Vorderansicht, Schnittansicht gemäß der Linie B-B von Figur 2.14.a und in perspektivischer Ansicht dargestellt. Das Innenrohr 73 weist einen Eingangsrohrabschnitt 97, deren Figur 2.14.b nur verkürzt dargestellt ist, einen Ausgangsrohrquerschnitt 98 und einen Aufweitungsrohrabschnitt 99 auf. Der Aufweitungsrohrabschnitt 99 verbindet den Eingangsrohrabschnitt 97 kleineren Querschnitt mit dem Ausgangsrohrabschnitt 98 größeren Durchmessers.

In den Figuren 2.15.a bis 2.15.c ist das Getriebe 63 näher dargestellt, wobei es einen herkömmlichen Aufbau mit einem Gehäuse 65 aufweist. Von der durch den Rotor 60 (Figur 2.5.b) angetriebenen Drehwelle 67 wird die Drehkraft auf die Abtriebswelle 71 übertragen, die 90° versetzt zur Drehwelle 67 nach außen aus dem Gehäuse 65 vorspringt und im Betrieb mit der Eingangswelle 93 des Generators steht.

In Figur 2.16 ist in perspektivischer Darstellung eine weitere Luftströmungsleiteinrichtung 101 dargestellt, die als eine erste Form einer Parallelrohr-Anordnung ausgebildet ist. Wie aus Figur 2.16 ersichtlich, sind um ein Mittenrohr 103 konzentrische Kreise von sich parallel zueinander erstreckenden Rohren 105 vorgesehen, wobei sich deren Durchmesser vom ersten Ring um das Mittenrohr 103 bis zum äußersten Ring stets vergrößert. Zur Ausnutzung des maximal möglichen Durchströmungsquerschnitts sind weiterhin im Durchmesser kleine Rohre 107 in den Zwischenräumen zwischen den Rohren 105 des äußersten Rohrkreises angeordnet. Diese Parallelrohr-Einrichtung 101 dient ebenfalls zur Beruhigung der Luftströmung und stellt eine laminare Luftströmung am Ausgang sicher.

Nachfolgend wird nunmehr die Funktionsweise der ersten Ausführungsform der erfindungsgemäßen Windkraftanlage 1 beschrieben.

Es konnte herausgefunden werden, dass der Wirkungsgrad der Energieerzeugung aus Umgebungsluft dadurch gesteigert werden kann, wenn eine beruhigte bzw. laminare Luftströmung vorliegt. Aus diesem Grund ist am Lufteinlass 4 eine Luftleiteinrichtung 27 vorgesehen, die die gegebenenfalls verwirbelte bzw. turbulente Umgebungsluft in einen laminaren Luftstrom gleichrichtet und diesen laminaren Luftstrom der ersten Luftbeschleunigungseinrichtung 39 zuführt, die gegenüber der Einlassseite 4 einen Unterdruck erzeugt.

Danach ergibt sich durch die beispielsweise in Form eines Ventilators ausgebildete erste Luftbeschleunigungseinrichtung 39 eine Verwirbelung des Luftstroms, so dass vorteilhafterweise durch die nachfolgende Luftströmungsleiteinrichtung 49 der verwirbelte Luftstrom wieder gleichgerichtet und in eine laminare Strömung überführt wird.

Durch die Venturi-Düse 10 im zweiten Abschnitt 9 des Strömungskanals 3 wird die Luft auf einen maximalen vorbestimmbaren Wert beschleunigt. Es hat sich herausgestellt, dass der Winkel der Venturi-Düse gleich oder kleiner 15° betragen soll, um eine erneute Verwirbelung des Luftstroms zu vermeiden.

In dem dritten Abschnitt treibt die beschleunigte Luft den Rotor 60 an, wobei dem Luftstrom hierbei sowohl kinetische Energie, der Luftstrom verlangsamt sich, als auch Wärmeenergie, der Luftstrom wird abgekühlt, entzogen wird. Der Entzug der Wärmeenergie aus der Luft ist dabei erheblich.

Um durch den verlangsamten Luftstrom keinen Staudruck zu erhalten, wird die Luft mittels der zweiten Beschleunigungseinrichtung im fünften Abschnitt 15 wieder beschleunigt, wobei vorteilhafterweise vor dem Ventilator eine Luftströmungsleiteinrichtung 79 zur Beruhigung der Strömung vorgesehen ist.

Die vierten Abschnitt 13 soll eine Aufweitungswinkel β haben, der gleich oder kleiner 7° ist, wodurch ungewünschte Verwirbelungen des Luftstroms weiterhin vermieden werden können.

Anschließend an den Ventilator, der die zweite Beschleunigungseinrichtung 85 bildet schließt sich wiederum eine Luftströmungsleiteinrichtung 87 an, die erneut zur Gleichrichtung des verwirbelten Luftstromes dient um diesen in laminarer Strömung in den sechsten Abschnitt 16 auszubringen, der sich ebenfalls mit einem Winkel β öffnet, was zu einer erheblichen Geschwindigkeitsreduzierung des ausströmenden Luftstroms, der anschließend noch von der Luftleiteinrichtung 29 gleichgerichtet wird, führt, mit dem Vorteil eines relativ beruhigten Ausströmens des Luftstroms in die Umgebung. Es wird darauf hingewiesen, dass eine Funktionsweise der erfindungsgemäßen Windkraftanlage 1 auch ohne Luftströmungsleit- bzw. Luftleiteinrichtungen möglich ist, deren Wirkungsgrad jedoch gegenüber der Ausführungsform, die in den Figuren 1.a bis 2.b in ihrer Gesamtheit dargestellt ist, geringer ist.

Es wird weiterhin darauf hingewiesen, dass sowohl der als Venturi-Düse bezeichnete sich verjüngerte Abschnitt als auch der als Laval-Düse bezeichnete Abschnitt nicht linear verjüngt oder aufgeweitet werden müssen, sondern auch glockenförmige Verengungen und Aufweitungen möglich sind. Wichtig hierbei ist, dass es zu keinem Strömungsabriss kommt. Gleiches gilt für die Vorleit- und Nachleiträder, die der Erhöhung der Effizienz der Windkraftanlage dienen.

Nachfolgend wird unter Bezugnahme auf die Figuren 3 bis 3.14.b eine zweite bevorzugte Ausführungsform der erfindungsgemäßen Windkraftanlage beschrieben.

In Figur 3 ist im Wesentlichen das optimierte Mittelstück der gesamten Anlage 1 dargestellt, wobei die Hinweise Figur bzw. abgekürzt F. die jeweilige Figurenschar, die sich an die Figur 3 anschließt, entsprechend wie oben, bezeichnet.

Der Eingangsabschnitt 4 und erste Abschnitt 7 sind nicht oder nur gering dargestellt, wobei sich an den ersten Abschnitt 7 ein erster Zusatzabschnitt 107 anschließt.

In dem Strömungskanal 3 sind die in der ersten Ausführungsform der Windkraftanlage vorhandenen Mittenrohre teilweise ersetzt durch kegelförmige Verjüngungen bzw. Aufweitungen, die später genauer beschrieben werden.

Weiterhin ist ein Zusatzabschnitt 115 zwischen dem vierten Abschnitt 13 und dem fünften Abschnitt 15 vorgesehen, der ebenfalls weiter unten näher beschrieben wird.

Es wird nunmehr Bezug genommen auf die Figuren 3.1.a bis 3.2.b. Figur 3.1.a zeigt in Seitenansicht einen Rohrabschnitt 108 und in Figur 3.1.b den Rohrabschnitt 108 in Ansicht von der Einlassseite. Wie aus den Figuren ersichtlich verjüngt sich der Rohrabschnitt 108 leicht.

In den Figuren 3.2.a und 3.2.b ist eine kegelförmige Verjüngung 109 in Form eines geraden Kreiskegels dargestellt, der sich in Strömungsrichtung bis zu einer Spitze 110 verjüngt. Damit die Strömungsgeschwindigkeit des Luftstroms im Strömungskanal 3 konstant gehalten werden kann, wird die durchströmte Querschnittsfläche zwischen Einlassseite und Auslassseite des Rohrabschnitts 108 konstant gehalten. Dies erklärt die leicht konische Ausbildung der Außenhülle des Rohrabschnitts 108. Der Neigungswinkel ist der Winkel α*.*

Die Figur 3.3.a zeigt in Seitenansicht die Figur 3.3.b in Frontansicht einen weiteren Rohrabschnitt 111 mit konstanter Außenhülle. Es hat sich gezeigt, dass ein solcher zusätzlicher Rohrabschnitt 111 äußerst günstig für das stabile Strömungsverhalten der Luftströmung ist.

In den Figuren 3.4.a und 3.4.b ist eine weitere Luftströmungsleiteinrichtung 112 in Schnittansicht gemäß A-A in Figur 3.4.b dargestellt. Die Luftströmungsleiteinrichtung 112 ist aus konzentrisch angeordneten Rohrabschnitten 113 gebildet und stellt eine zweite Ausführungsform einer Parallelrohr-Anordnung dar.

An den Rohrabschnitt 112 schließt sich ein weiterer Zusatzrohrabschnitt 114 an, der in den Figuren 3.5.a und 3.5.b dargestellt ist. Er ist dem Zusatzrohrabschnitt 111 gemäß den Figuren 3.3.a und 3.3.b und hat auch dessen Funktion.

In Figur 3.6.a ist der zweite Abschnitt 9 schematisch dargestellt, der mit Neigungswinkel α ausgebildet ist. In Figur 3.6.b ist der zweite Abschnitt 9 in Vorderansicht von der Einlassseite her dargestellt.

Die Figur 3.7.a zeigt einen Aufweitungsabschnitt 119 in Seitenansicht, der als gerader Kreiskegel ausgebildet ist, und sich von einer Spitze 120 unter Neigungswinkel α aufweitet. In Figur 3.7.b ist der Aufweitungsabschnitt 119 in Vorderansicht dargestellt, wobei er von der Abströmseite dargestellt ist.

Die Figuren 3.8.a und 3.8.b zeigen schematisch den vierten Abschnitt 13, der mit Aufweitungswinkel β ausgebildet ist. Wie in Zusammenschau mit Figur 3 ersichtlich, ist in dem vierten Abschnitt 13 ein Verjüngungsabschnitt 121 ausgehend vom dritten Abschnitt 11 angeordnet, den die Figuren 3.9.a in Seitenansicht und in 3.9.b in Vorderansicht dargestellt ist. Auch dieser Verjüngungsabschnitt 121 ist in gerader Kreiskegelform ausgebildet und weist eine Spitze 122 auf. Sein Neigungswinkel ist mit jenem der Laval-Düse 12 identisch.

Es wird darauf hingewiesen, dass der Neigungswinkel des Aufweitungsabschnitts 119 in Neigungswinkel des zweiten Abschnitts 9 und der Neigungswinkel des Verjüngungsabschnitts 121 dem Neigungswinkel des vierten Abschnitts 13 entsprechen muss, damit sowohl der Venturieffekt einerseits, als auch der Lavaleffekt andererseits voll erreicht wird.

In den Figuren 3.10.a und 3.10.b ist ein weiterer Rohrabschnitt 123 vorgesehen, der im Wesentlichen gleich den Zusatzrohrabschnitten 111 und 114 (vergleiche 3.3.a, 3.3.b, 3.5.a und 3.5.b) ausgebildet ist und auch die gleiche Funktion hat.

Weiterhin sind über Zusatzabschnitt 107 eine Luftströmungsleiteinrichtung 124 gemäß Figuren 3.11.a und 3.11.b mit konzentrischen Rohrabschnitt 125 vorgesehen, sowie ein weiterer Zusatzrohrabschnitt 126, der im Wesentlichen gleich aufgebaut ist wie die Zusatzrohrabschnitte 111, 114 und 123 und auch die gleiche Funktion aufweisen. Der Zusatzrohrabschnitt 126 ist in den Figuren 3.12.a und 3.12.b dargestellt.

Weiterhin weist der Zusatzabschnitt 115 einen Rohrabschnitt 127 auf, der sich leicht konisch aufweitet, wie aus Figur 3.13.a ersichtlich. Die Vorderansicht ist in Figur 3.13.b dargestellt. Ein Aufweitungsabschnitt 128, der gemäß Figur 3 in dem Rohrabschnitt 127 angeordnet ist, ist detailliert in den Figuren 3.14.a und 3.14.b in Seiten- und Vorderansicht dargestellt. Er ist als gerader Kreiskegel ausgebildet und weist ein Spitze 129 auf.

Es wird nunmehr Bezug genommen auf Figur 4 in der eine Aufstellanordnung der erfindungsgemäßen Windkraftanlage 1 in der Ausführungsform gemäß Figuren 1.a bis 2.b dargestellt ist. Der Rahmen 17 mit Gestell 21 ist auf einer Platte 131 angeordnet, die selbst in einem Gestell 135 angeordnet ist. Das Gestell 135 weist eine obere Abdeckung 136, eine Bodenplatte 137 sowie einzelne Stützen 138 auf.

Die einzelnen Elemente der Windkraftanlage 1 sind aus Gründen der Übersicht in dieser Figur 4 nicht mehr einzeln bezeichnet. Auf der Einlassseite 4 ist zusätzlich eine glockenförmige, trichterförmige Düse 141, in Form einer Venturi-Düse vorgesehen, die dazu dient, die Umgebungsluft beschleunigt in den Strömungskanal 3 einzuleiten.

Entsprechend ist auf der Auslassseite 5 eine trichterförmige, glockenförmige ausgebildete Düse in Form einer Laval-Düse 143 vorgesehen, die zu einer entsprechenden Verlangsamung beim Ausbringen der Luftströmung aus der Windkraftanlage 1 dient. Dies hat auch den Vorteil, dass zur Ausbildung keine besonders große Ausbringkraft notwendig ist.

Die Bodenplatte 137 befindet sich im Wesentlichen auf der Höhe des umgebenden Erdbereichs 145 und bildet ihrerseits die Abdeckplatte eines Auftriebskörpers 146, der kreisscheibenförmig ausgebildet ist, wie später noch erläutert wird. Der Auftriebskörper 146 weist weiterhin eine Bodenplatte 147, eine Seitenwand 148 sowie Verstärkungsstreben 149 auf. Die Verstärkungsstreben erstrecken sich von einer Mittelachse 150 in die unteren Ecken 151 bzw. 152.

Der Auftriebskörper 146 ist in einem kreisförmigen Bassin 155 angeordnet, das mit einer Flüssigkeit 156, insbesondere Wasser 156 gefüllt ist. Im Bereich der Mittenachse 150 springt ein Drehzapfen 157 von der Bodenplatte 147 nach unten senkrecht hervor und ist in einem Drehlager 159 drehbar aufgenommen. Das Drehlager selbst ist in einem Fundamenblock 160 angeordnet.

Mit Hilfe dieser Ausgestaltung ist es möglich, den Auftriebskörper 146 und damit die gesamte Anlage entsprechend nahezu reibungsfrei zu drehen und damit die Windkraftanlage 1 der herrschenden Windrichtung entsprechend anzupassen. Zur Stabilisierung der Drehung des Käfigs ist weiterhin ein ringförmiges Lager 161 vorgesehen.

Es wird nunmehr Bezug genommen auf Figur 5, die eine Schnittansicht entlang der Linie IV-IV von Figur 4 ist.

Figur 6 zeigt die erfindungsgemäße Windkraftanlage in ihrer Vorortaufstellung gemäß Figuren 4 und 5 in einer Draufsicht von oben. In der Ansicht von oben ist deutlich die kreisförmige Ausgestaltung des Bassins 155 ersichtlich, in dem Flüssigkeit 156 angeordnet ist. Die kreisförmige Bodenplatte 137 ist drehbar in dem Bassin 155 gelagert. Aufgrund der Draufsicht gemäß Figur 6 ist die erfindungsgemäße Windkraftanlage 1 durch die obere Abdeckung 136 verdeckt und somit nur in gestrichelten Linien schematisch dargestellt.

Es wird nunmehr Bezug genommen auf Figur 7, in der ein erfindungsgemäßes Windkraftanlagensystem 170 dargestellt ist. dieses Windkraftanlagensystem 170 baut auf, auf der Ausgestaltung der Windkraftanlage gemäß den Figuren 4 bis 6, wobei gleiche Bezugsziffern verwendet werden.

Das Windkraftanlagensystem 170 weist somit mehrere übereinander angeordnete Windkraftanlagen 1 auf, die gleichmäßig übereinander angeordnet sind, und, wie aus Figur 8 ersichtlich, weist das erfindungsgemäße Windkraftanlagensystem 170 auch nebeneinander geordnete Windkraftanlagen 1 auf. Aus Figur 8 ergibt sich eine Anzahl von neun Windkraftanlagen 1 in dem Windkraftanlagensystem 170, wobei diese Anzahl nur beispielhaft zu verstehen ist und eine beliebige Kombination von nebeneinander und übereinander angeordneten Windkraftanlagen im Rahmen der Erfindung liegt.

Wie aus den Figuren 7 und 8 weiterhin ersichtlich, ist auf der Oberseite der Abdeckplatte 136 eun Lagerblock, von dem aus ein Drehzapfen 164 sich senkrecht nach oben erstreckt. Der Drehzapfen 164 ist drehbar in einem Lager 165 gelagert, das wiederum in einem Halterahmen 166 angeordnet ist, wie er beispielsweise näher unter Bezugnahme auf Figur 9 beschrieben wird.

In Figur 9 ist das Windkraftanlagensystem 170 in seiner Gesamtheit in Vorderansicht dargestellt. Zusätzlich zu der Darstellung gemäß Figur 8 ist der Halterahmen 166 dargestellt, der dazu dient das Windkraftanlagensystem drehbar und stabil zu Lagern, da hier erhebliche Kräfte, insbesondere bei starkem Wind wirken können. Er weist Stützpfeiler 167 und Querstreben 168 auf mit entsprechenden Zusatzverstärkungen 169. Die Stützpfeiler 167, beispielsweise insgesamt 4, sind mit Fundamenten 175 verbunden. Im übrigen liegt eine solche Rahmenkonstruktion im Können des Fachmanns.

In Figur 10 ist schematisch der obere Teil des Windkraftanlagensystems 170 von Figur 9 dargestellt, jedoch um 90° versetzt. Zusätzlich ist oben, oberhalb der Querträger 168 ein Segel 178 angeordnet, das an einem Masten 179 befestigt ist, der drehbar gelagert und mit der Abdeckung 136 verbunden ist. Dadurch wir erreicht, dass sich das System nach der Windrichtung ausrichtet.

Zur besseren Führung ist das Segel 178 gleitend oder rollend über ein Lager 180 auf einem Ring 181 gelagert.

In den Figuren 11 und 12 ist eine dritte Ausführungsform der erfindungsgemäßen Windkraftanlage 1 dargestellt. Diese hat die Besonderheit, vertikal angeordnet zu sein.

Um den im wesentlichen gemäß Pfeil 200 waagrecht strömenden Wind einzuleiten weist die Anlage am Einlass 4 eine bevorzugt halbkreisförmige Lufteinschleusvorrichtung 190 auf. Diese führt den Eingangsluftstrom dem Einlass 4 zu, wonach sich eine Windkraftanlage gemäß der ersten Ausführungsform (Fig. 1.a bis 2.b) oder der zweiten Ausführungsform (Fig. 3) anschließt.

Über die Abtriebswelle 71 wird der Generator 23 angetrieben und der erzeugte Strom wird über ein Kabel 24 abgeleitet.

An den Auslass 5 ist eine Strömungsumlenkeinrichtung 192 vorgesehen, die einen Strömungskanal aufweist, der den ausströmenden Luftstrom von der vertikalen Richtung in eine im wesentlichen horizontale Richtung umlenkt.

Der Strömungskanal ist in einem Umströmungskörper 194 angeordnet, der eine spezielle Form aufweist. Bevorzugt weis er eine "Doppeltragflächenform" auf, d. h. die gemäß Pfeil 200 anströmende Luft wird sowohl nach oben als auch nach unten abgelenkt und dabei beschleunigt. Dies führt vorteilhafterweise dazu, dass die aus der Anlage 1 ausströmende Luft hinter dem Strömungskanal 193 mitgerissen wird.

Wie aus Figur 11 ersichtlich, weitet sich der Strömungskanal 193 in Strömungsrichtung auf und weist eine weitere Beschleunigungseinrichtung 195, die so aufgebaut sein kann, wie jene oben beschrieben, also einen oder mehrere Ventilatoren aufweisen kann. Weiterhin kann ein Vorleitrad 196 und ein Nachleitrad 197 vorgesehen sein, die oben auch entsprechend beschrieben wurden.

Hinter dem Strömungskanal 194 sind Leitplatten 196 angeordnet. Diese dienen zur Ausrichtung des Luftstroms aus den Strömungskanal. Sie können über dessen Querschnitt hervorstehen, so dass sie auch noch die anströmende Umgebungsluft ausrichten.

Der Umströmungskörper 194 wird von einem Rahmen 198 abgestützt.

Die Windkraftanlage 1 ist in einer entsprechenden Rahmenkonstruktion 199 aufgehängt. Im Bereich der Lufteinschleusvorrichtung 190 ist ein Segel 191 an dieser angebracht und dient dazu, die gesamte Anlage der Windrichtung nachzuführen. Dabei wird es von dem Umströmungskörper 194 unterstützt.

Wie aus Figur 12 ersichtlich ist ein Lagerring 201 vorgesehen.

In Figur 13 ist eine erste Ausführungsform einer Rotorvorrichtung dargestellt. Um eine starre Welle 68, die einen Flansch 202 aufweist, befindet sich einerseits ein Lagereinrichtung 59 und andererseits ein Lager 203 das mit dem einem Rotor 60 verbunden ist.

Der Rotor 60 weist Rotorblätter oder -schaufeln 66 auf, die mit einem Außenring 70 verbunden sind. Die Lagereinrichtung 59 weist Platten 62 auf, die ebenfalls mit einem Außenring 204 verbunden sind, der Teil der Außenhülle 6 des Strömungskanals 3 ist. Der sich drehende Außenring 70 weist einen Zahnkranz 80 auf, der mit einem oder mehreren Ritzeln (nicht dargestellt), die gleichmäßig am Umfang angeordnet sind, kämmt. Die Ritzel stehen jeweils mit einer Antriebswelle in Verbindung die je einen Generator antreiben.

Zwischen den Platten 62 und den Schaufeln 66 ist ein ausreichender Luftspalt 205 vorgesehen.

In Figur 14 ist eine weitere Ausführungsform eines Generators 210 dargestellt. Der Generator 210 ist in an sich bekannter Weise aufgebaut. Er weist einen Anker oder ein Polrad 212 mit Erregerwicklungen 214 auf. Um das Polrad sind entsprechende Induktionswicklungen angeordnet.

Die Besonderheit bei diesem Generator ist, dass das Polrad 212 um den dritten Abschnitt 11 der Windkraftanlage 1 gesetzt wird, beispielsweise in der Ausführungsform gemäß Figur 13, wobei anstelle des äußeren Zahnkranzes 80 eine entsprechend passende Verbindung verwendet wird.

Der Generator weist weiterhin einen Ständer 218 und einen Halter 220 auf, der um 90° im Urzeigersinn gedreht auch als Abstützlager dienen kann.

## Patentansprüche

1. Windkraftanlage (1) zur Erzeugung von elektrischer Energie mittels bewegter Umgebungsluft, mit einem Strömungskanal (3) durch den die Umgebungsluft durch Ausbildung eines Luftstroms geleitet wird, wobei der Strömungskanal (3) eine ihn begrenzende äußere Hülle (6) aufweist und weiterhin aufweist:
- einen ersten Abschnitt (7) mit im Wesentlichen konstantem Querschnitt, in den die Umgebungsluft einbringbar ist, wobei eine Luftbeschleunigungseinrichtung (39) in dem ersten Abschnitt (7) vorgesehen ist,
- einen zweiten sich verjüngenden Abschnitt (9),
- einen sich an den zweiten Abschnitt (9) anschließenden dritten Abschnitt (11), in dem ein Rotor (60) angeordnet ist, der durch den durchströmenden Luftstrom in Drehung versetzt wird und dessen Drehung zur Erzeugung elektrischer Energie dient,
- einen vierten sich aufweitenden Abschnitt (13), **gekennzeichnet durch**
- einen fünften Abschnitt (15), in dem eine zweite Luftbeschleunigungseinrichtung (85) vorgesehen ist, die der Ausbringung der in dem Strömungskanal (3) eingeführten Luft dient.

2. Windkraftanlage nach Anspruch 1, **dadurch gekennzeichnet, dass** die Luftbeschleunigungseinrichtung (39, 85) des ersten und/oder des fünften Abschnitts (7, 15) des Strömungskanals (3) wenigstens einen Ventilator aufweist.

3. Windkraftanlage nach Anspruch 1 oder 2, **dadurch gekennzeichnet, dass** in Strömungsrichtung der Umgebungsluft nach der Luftbeschleunigungseinrichtung (39; 85) des ersten und/oder des fünften Abschnitts (7, 15) des Strömungskanals (3) eine Strömungsleiteinrichtung (49, 87) vorgesehen ist, die den von der jeweiligen Luftbeschleunigungseinrichtung verwirbelten bzw. rotierenden Luftstrom in eine laminare Strömung überführt.

4. Windkraftanlage nach Anspruch 3, **dadurch gekennzeichnet, dass** die Strömungsleiteinrichtung (49, 87) ein Nachleitrad ist.

5. Windkraftanlage nach Anspruch 3, **dadurch gekennzeichnet, dass** die Strömungsleiteinrichtung (49, 87) eine Parallelrohr-Einrichtung ist.

6. Windkraftanlage nach einem der Ansprüche 3 bis 5, **dadurch gekennzeichnet, dass** die Strömungsleiteinrichtung sowohl ein Nachleitrad als auch eine Parallelrohr-Einrichtung (101, 112) umfasst.

7. Windkraftanlage nach einem der Ansprüche 1 bis 6, **dadurch gekennzeichnet, dass** vor der Luftbeschteunigungseinrichtung (39) des ersten Abschnitts (7) und/oder der Luftbeschleunigungseinrichtung (85) des fünften Abschnitts (15) eine Luftleiteinrichtung (27, 79) zur Erzielung einer laminaren Luftströmung vorgesehen ist.

8. Windkraftanlage nach Anspruch 7, **dadurch gekennzeichnet, dass** eine Parallelrohr-Einrichtung (101, 112) vor der Luftleiteinrichtung (87) des fünften Abschnitts (15) vorgesehen ist.

9. Windkraftanlage nach einem der Ansprüche 5 bis 8, **dadurch gekennzeichnet, dass** die Parallelrohr-Einrichtung (112) aus einer Mehrzahl von konzentrisch um ein Mittelrohr angeordneter Rohrabschnitte (113) gebildet ist.

10. Windkraftanlage nach einem der Ansprüche 1 bis 9, **dadurch gekennzeichnet, dass** der Strömungskanal (3) im Bereich des zweiten sich verjüngenden Abschnitts (9) sich mit einem Winkel α von 15° oder kleiner verengt.

11. Windkraftanlage nach einem der Ansprüche 1 bis 10, **dadurch gekennzeichnet, dass** der Strömungskanal (3) im vierten Abschnitt (13) sich nach dem Rotor (60) mit einem Winkel β von 7° oder kleiner aufweitet.

12. Windkraftanlage nach einem der Ansprühe 1 bis 11, **dadurch gekennzeichnet, dass** der Durchmesser des Strömungskanals (3) im Bereich des ersten Abschnitts (7) gleich jenem im Bereich des fünften Abschnitts (15) ist.

13. Windkraftanlage nach einem der Ansprüche 1 bis 12, **dadurch gekennzeichnet, dass** der Querschnitt des Auslasses (5) des Strömungskanals (3) größer als der Querschnitt des Einlasses (4) des Strömungskanals (3), vorzugsweise im Wesentlichen doppelt so groß ist.

14. Windkraftanlage nach einem der Ansprüche 3 bis 13, **dadurch gekennzeichnet, dass** hinter der Strömungsleiteinrichtung (49) nach der Luftbeschleunigungseinrichtung (39) im ersten Abschnitt (7) ein sich verjüngender Rohrabschnitt (108) vorgesehen ist, in dem ein sich zu einer Spitze verjüngender Strömungskegel (109) vorgesehen ist, entlang dem der Luftstrom strömt, wobei der Verjüngungswinkel α des Kegels (109) im wesentlichen 15° oder kleiner ist.

15. Windkraftanlage nach Anspruch 14, **dadurch gekennzeichnet, dass** sich an den sich verjüngenden bzw. verengenden Strömungskanal-Rohrabschnitt (108) ein Abschnitt konstanten Querschnitts (107) anschließt, in dem bevorzugt eine weitere Strömungsleiteinrichtung (101,112) vorgesehen ist.

16. Windkraftanlage nach einem der Ansprüche 1 bis 15, **dadurch gekennzeichnet, dass** in dem zweitem Abschnitt (9) ein sich von einer Spitze (120) bis zum Querschnitt der Nabe des Rotors aufweitender Kegel (119) vorgesehen ist, dessen Aufweitungswinket α dem Verjüngungswinkel α des zweiten sich verjüngenden Abschnitts (9) entspricht.

17. Windkraftanlage nach einem der Ansprüche 1 bis 16, **dadurch gekennzeichnet, dass** in dem viertem Abschnitt (13) ein sich zu einer Spitze (122) verjüngender Kegel (121) vorgesehen ist, dessen Ausgangsquerschnitt im Wesentlichen gleich dem Querschnitt der Nabe des Rotors (60) ist, wobei der Verjüngungswinkel β des Kegels (121) dem Aufweitungswinkel β des vierten sich aufweitenden Abschnitts (13) entspricht.

18. Windkraftanlage nach einem der Ansprüche 1 bis 17, **dadurch gekennzeichnet, dass** sich an den vierten sich aufweitenden Abschnitt (13) ein Strömungsberuhigungsabschnitt (116) des Strömungskanals (3) anschließt, der einen im Wesentlichen konstanten Außendurchmesser und bevorzugt eine weitere Strömungsleiteinrichtung (124) aufweist.

19. Windkraftanlage nach einem der Ansprüche 1 bis 18, **dadurch gekennzeichnet, dass** sich vor dem fünften Abschnitt (15) vor der Strömungsleiteinrichtung ein sich von einer Spitze mit dem Winkel β aufweitender Kegel vorgesehen ist, dessen Endquerschnitt im Wesentlichen dem Querschnitt der Nabe der Strömungsleiteinrichtung (79) entspricht.

20. Windkraftanlage nach einem der Ansprüche 1 bis 19, **dadurch gekennzeichnet, dass** der dritte Abschnitt (11) ein Getriebe (63) umfasst, das die Drehung des Rotors (60) in eine Drehbewegung wenigsten einer sich im Wesentlichen senkrecht vom Strömungskanal (3) aus erstreckenden Ausgangswelle (71) übersetzt, die zum Antrieb eines Generators (23) dient.

21. Windkraftanlage nach Anspruch 20, **dadurch gekennzeichnet, dass** das Getriebe (63) ein Gehäuse (65) aufweist, in dem eine Welle (67) gelagert ist, wobei die Welle (67) auf der einen Seite außerhalb des Gehäuses mit einem Rotor (60) und auf der anderen Seite mit einer um 90° versetzten Abtriebswelle (71) verbunden ist, und das Gehäuse (65) des Getriebes in einer Lagereinrichtung (59) gelagert ist, die Lagerplatten (62) aufweist, die mit der Außenhülle (6) des Strömungskanals (3) verbunden sind.

22. Windkraftanlage nach einem der Ansprüche 1 bis 19, **dadurch gekennzeichnet, dass** der Rotor (60) auf einer Welle (68) gelagert ist, die mit der Lagereinrichtung (59) drehfest verbunden ist; dass der Rotor (60) einen Außenrohrabschnitt (70) aufweist, der einen Teil der Außenhülle des Strömungskanals bildet, wobei der Außenrohrabschnitt (70) einen Zahnkranz (80) aufweist, der zur Übertragung der Drehung des Rotors (60) über ein Getriebe zu einem Generator dient.

23. Windkraftanlage nach Anspruch 22, **dadurch gekennzeichnet, dass** zur Übertragung der Drehung des Rotors (60) mehrere, insbesondere vier am Umfang gleich verteilte Ritzel vorgesehen sind, die jeweils mit einer Antriebswelle verbunden sind, welche jeweils mit einem Generator verbunden sind.

24. Windkraftanlage nach einem der Ansprüche 1 bis 19, **dadurch gekennzeichnet, dass** der Rotor auf einer Welle gelagert ist, die mit der Lagereinrichtung drehfest verbunden ist, dass der Rotor einen Außenabschnitt aufweist, der das Polrad bzw. den Anker eines Generators antreibt.

25. Windkraftanlage nach einem der Ansprüche 1 bis 24, **dadurch gekennzeichnet, dass** sie in einem Gestell (135) angeordnet ist, dass drehbar gelagert ist.

26. Windkraftanlage nach Anspruch 25, **dadurch gekennzeichnet, dass** eine Bodenwand (137), eine obere Abdeckwand (136), und eine Mehrzahl von Stützen (138) aufweist, wobei die ersten bis fünften Abschnitte (7, 9, 11, 13, 15) des Strömungskanals (3) im Wesentlichen zwischen den äußeren Stützen angeordnet sind.

27. Windkraftanlage nach Anspruch 26, **dadurch gekennzeichnet, dass** die Windkraftanlage (1) im Abstand von der Bodenplatte (137) angeordnet ist.

28. Windkraftanlage nach einem der Ansprüche 25 bis 27, **dadurch gekennzeichnet, dass** auf der Luftstromeinlassseite (4) ein weiterer sich verjüngenden Abschnitt (141) vorgesehen ist.

29. Windkraftanlage, nach einem der Ansprüche 25 bis 28, **dadurch gekennzeichnet, dass** auf der Luftausbringseite (5) ein weiterer sich aufweitenden Abschnitt (142) vorgesehen ist.

30. Windkraftanlage nach einem der Ansprüche 25 bis 29, **dadurch gekennzeichnet, dass** das drehbare Gestell (135) einen drehbaren Auftriebskörper (146) umfasst, der in einer Flüssigkeit (156) schwimmend gelagert ist.

31. Windkraftanlage nach Anspruch 30, **dadurch gekennzeichnet, dass** die Flüssigkeit (156) in einem als kreisförmigen Bassin (155) aufgenommen ist, in dem der Auftriebskörper (146) angeordnet ist.

32. Windkraftanlage nach einem der Ansprüche 25 bis 31, **dadurch gekennzeichnet, dass** an einer Bodenplatte (147) des Auftriebskörpers (146) ein Drehzapfen (157 nach unten vorspringt und in einem Lager (159), das in einem Lagerbock (160) ausgebildet ist, drehbar gelagert ist.

33. Windkraftanlage nach Anspruch 32, **dadurch gekennzeichnet, dass** oberhalb des Flüssigkeitsspiegels (158) ein umlaufendes Lager (161) zwischen der Seitenwand (148) des Auftriebskörpers (146) und dem Bassin (155) angeordnet ist.

34. Windkraftanlage nach einem der Ansprüche 1 bis 33, **dadurch gekennzeichnet, dass** sie vertikal angeordnet ist.

35. Windkraftanlage nach Anspruch 35, **dadurch gekennzeichnet, dass** eine Lufteinschleusvorrichtung (190) am oberen Einlass der Windkraftanlage (1) vorgesehen ist, die bevorzugt halbkreisförmig ausgestaltet ist.

36. Windkraftanlage nach Anspruch 34 oder 35, **dadurch gekennzeichnet, dass** an der Auslassseite (5) eine Strömungsumlenkeinrichtung (192) vorgesehen ist, die einen Strömungskanal (193) aufweist, der den ausströmenden Luftstrom von der vertikalen Richtung in eine im wesentlichen horizontale Richtung umlenkt.

37. Windkraftanlage nach Anspruch 36, **dadurch gekennzeichnet, dass** der Strömungskanal (193) in einem Umströmungskörper (194) angeordnet ist, der von Umgebungsluft umströmt wird.

38. Windkraftanlage nach Anspruch 36 oder 37 **dadurch gekennzeichnet, dass** sich der Strömungskanal (193) in Strömungsrichtung aufweitet und bevorzugt eine weitere Luftbeschleunigungseinrichtung (195) aufweist.

39. Windkraftanlage nach einem der Ansprüche 36 bis 38 **dadurch gekennzeichnet, dass** in Strömungsrichtung hinter dem Strömungskanal (193) mehrere Leitplatten (196) angeordnet sind, die bevorzugt über den Querschnitt des Strömungskanals (193) hervorstehen.

40. Windkraftanlage nach einem der Ansprüche 34 bis 39, **dadurch gekennzeichnet, dass** ein Segel (191) an der Windkraftanlage (1) angebracht ist, das dazu dient, diese in die optimale Strömungsrichtung der Umgebungsluft nachzuführen.

41. Windkraftanlagensystem (170) zur Erzeugung von elektrischer Energie mittels bewegter Umgebungsluft, **dadurch gekennzeichnet, dass** es mehrere übereinander und/oder nebeneinander angeordnete Windkraftanlagen (1) nach einem der Ansprüche 1 bis 40 aufweist.

42. Windkraftanlagensystem nach Anspruch 41, **dadurch gekennzeichnet, dass** es ein Gestell aufweist, in dem die übereinander- und/oder nebeneinander angeordneten Windkraftanlagen (1) drehbar gelagert sind.

43. Verfahren zur Erzeugung elektrischer Energie aus bewegter Umgebungsluft, das die folgenden Schritte aufweist:
- Einbringen von Umgebungsluft in einen ersten Abschnitt (7) eines Strömungskanals (3),
- Beschleunigen des Luftstroms mittels einer Beschleunigungseinrichtung (39), die in dem ersten Abschnitt (7) des Strömungskanals (3) angeordnet ist,
- weiteres Beschleunigen des Luftstroms in einem zweiten sich verjüngenden Abschnitt (9) des Strömungskanals (3) mittels einer Verengung des Strömungskanals,
- Durchführen des Luftstroms durch einen dritten Abschnitt (11) des Strömungskanals (3) und Antreiben eines Rotors (60) in diesem Abschnitt,
- Ausbringen des Luftstroms in einen vierten sich aufweitenden Abschnitt (13) des Strömungskanals (3),
**gekennzeichnet durch**
- erneutes Beschleunigen des Luftstroms in einem fünften Abschnitt (15) des Strömungskanals (3) und Ausbringen des Luftstroms in die Umgebung, wobei dem Luftstrom während des Durchströmens des Strömungskanals (3) sowohl kinetische als auch Wärmeenergie entzogen wird.

44. Verfahren nach Anspruch 43, **dadurch gekennzeichnet, dass** vor der Beschleunigungseinrichtung (39, 87) des ersten und/oder fünften Abschnitts (7, 15) des Strömungskanals die einströmende Luft als laminare Strömung ausgerichtet wird.

45. Verfahren nach Anspruch 43 oder 44, **dadurch gekennzeichnet, dass** nach der Beschleunigungseinrichtung (39, 87) des ersten und/oder fünften Abschnitts (7, 15) des Strömungskanals die durchströmende Luft erneut in eine laminare Strömung ausgerichtet wird.

46. Verfahren nach einem der Ansprüche 43 bis 45, **dadurch gekennzeichnet, dass** der Luftstrom im ersten und zweiten Abschnitt des Strömungskanals beim Eintritt in den dritten Abschnitt (11) des Strömungskanals auf eine vorbestimmte Geschwindigkeit beschleunigt wird.

47. Verfahren nach einem der Ansprüche 43 bis 46, **dadurch gekennzeichnet, dass** durch den fünften Abschnitt ein Unterdruck im vierten Abschnitt erzeugt wird.

## Claims

1. A wind power installation (1) for generating electric power from moving ambient air, with a flow channel (3), through which the ambient air is conducted by the formation of an air stream, wherein the flow channel (3) comprises an external sleeve (6) forming its boundary and also comprises:
- a first section (7) with an essentially constant cross section, into which the ambient air can be introduced, wherein an air acceleration device (39) is provided in the first section (7),
- a second tapering section (9),
- a third section (11), following the second section (9), in which third section a rotor (60) is installed, which is set in rotation by the through-flowing air stream and the rotation of which serves to generate electric power,
- a fourth enlarging section (13),
**characterized by**
- a fifth section (15), which comprises a second air acceleration device (85), which serves to discharge the air introduced into the flow channel (3).

2. A wind power installation according to claim 1, **characterized in that** the air acceleration device (39, 85) of the first and/or of the fifth section (7, 15) of the flow channel (3) comprises at least one fan.

3. A wind power installation according to claim 1 or claim 2, **characterized in that** downstream with respect to the flow direction of the ambient air of the air acceleration device (39, 85) of the first and/or of the fifth section (7, 15) of the flow channel (3), a flow guide device (49, 87) is provided, which converts the turbulent and/or rotating air stream produced by the air acceleration device in question into a laminar flow.

4. A wind power installation according to claim 3, **characterized in that** the flow guide device (49, 87) is a downstream stator.

5. A wind power installation according to claim 3, **characterized in that** the flow guide device (49, 87) is a parallel-tube device.

6. A wind power installation according to one of claims 3 to 5, **characterized in that** the flow guide device comprises both a downstream stator and a parallel-tube device (101, 112).

7. A wind power installation according to one of claims 1 to 6, **characterized in that,** upstream of the air acceleration device (39) of the first section (7) and/or of the air acceleration device (85) of the fifth section (15), an air guide device (27, 79) is provided to achieve a laminar air flow.

8. A wind power installation according to claim 7, **characterized in that** a parallel-tube device (101, 112) is provided upstream of the air guide device (87) of the fifth section (15).

9. A wind power installation according to one of claims 5 to 8, **characterized in that** the parallel-tube device (112) is formed out of a plurality of tube sections (113) arranged concentrically around a central tube.

10. A wind power installation according to one of claims 1 to 9, **characterized in that** the flow channel (3) narrows down in the second tapering section (9) with an angle a of 15° or less.

11. A wind power installation according to one of claims 1 to 10, **characterized in that** the flow channel (3) expands in the fourth section (13) downstream from the rotor (60) at an angle β of 7° or less.

12. A wind power installation according to one of claims 1 to 11, **characterized in that** the diameter of the flow channel (3) in the area of the first section (7) is the same as that in the area of the fifth section (15).

13. A wind power installation according to one of claims 1 to 12, **characterized in that** the cross section of the outlet (5) of the flow channel (3) is larger than the cross section of the inlet (4) of the flow channel (3), preferably essentially twice as large.

14. A wind power installation according to one of claims 3 - 13, **characterized in that,** downstream of the flow guide device (49) following the air acceleration device (39) in the first section (7), a tapering tubular section (108) is provided, in which a flow cone (109), which tapers to a point and along which the air stream flows is provided, wherein the taper angle α of the cone (109) is essentially 15° or less.

15. A wind power installation according to claim 14, **characterized in that** a section of constant cross section (107), in which preferably another flow guide device (101, 112) is provided, is installed after the tapering or narrowing tubular section (108) of the flow channel.

16. A wind power installation according to one of claims 1 to 15, **characterized in that,** in the second section (9), a cone (119), which expands from a tip (120) to the cross section of the hub of the rotor, is provided, the expansion angle α of which is the same as the taper angle α of the second tapering section (9).

17. A wind power installation according to one of claims 1 to 16, **characterized in that,** in the fourth section (13), a cone (121), which tapers to a tip (122), is provided, the outlet cross section of which is essentially the same as the cross section of the hub of the rotor (60), wherein the taper angle β of the cone (121) is the same as the expansion angle β of the fourth enlarging section (13).

18. A wind power installation according to one of claims 1 to 17, **characterized in that,** adjoining said fourth enlarging section (13), a flow-calming section (116) of the flow channel (3) is provided, which comprises an essentially constant outside diameter and preferably an additional flow guide device (124).

19. A wind power installation according to one of claims 1 to 18, **characterized in that,** upstream of the fifth section (15), in front of the flow guide device, a cone, which expands from a tip at an angle β, is provided, the end cross section of which is essentially the same as the cross section of the hub of the flow guide device (79).

20. A wind power installation according to one of claims 1 to 19, **characterized in that** the third section (11) comprises a gear unit (63), which converts the rotation of the rotor (60) into a rotational movement of at least one output shaft (71), which extends in an essentially perpendicular manner from the flow channel (3) and serves to drive a generator (23).

21. A wind power installation according to claim 20, **characterized in that** the gear unit (63) comprises a housing (65), in which a shaft (67) is supported, wherein one end of the shaft (67) is connected outside the housing to a rotor (6), while the other end is connected to a takeoff shaft (71) offset by 90°, and **in that** the housing (65) of the gear unit is supported in a bearing device (59), which comprises bearing plates (62), which are connected to the external sleeve (6) of the flow channel (3).

22. A wind power installation according to one of claims 1 to 19, **characterized in that** the rotor (60) is supported on a shaft (67), which is connected nonrotatably to the bearing device (59); **in that** the rotor (60) comprises an external tubular section (70), which forms a part of the external sleeve of the flow channel, wherein the external tubular section (70) comprises a gear rim (80), which serves to transmit the rotation of the rotor (60) by way of a gear unit to a generator.

23. A wind power installation according to claim 22, **characterized in that,** to transmit the rotational movement of the rotor (60), several, specifically four, pinions distributed uniformly around the circumference are provided, each of which is connected to a drive shaft, each drive shaft being connected to a generator.

24. A wind power installation according to one of claims 1 to 19, **characterized in that** the rotor is mounted on a shaft, which is connected nonrotatably to the bearing device, and **in that** the rotor comprises an external section, which drives the rotor and/or the armature of a generator.

25. A wind power installation according to one of claims 1 to 24, **characterized in that** it is arranged in a stand (135), which is supported rotatably.

26. A wind power installation according to claim 25, **characterized in that** it comprises a bottom wall (137), a roof (136), and a plurality of posts (138), wherein the first to the fifth sections (7, 9, 11, 13, 15) of the flow channel (3) are arranged essentially between the outermost posts.

27. A wind power installation according to claim 26, **characterized in that** the wind power installation (1) is arranged a certain distance away from the bottom plate (137).

28. A wind power installation according to one of claims 25 to 27, **characterized in that** an additional tapering section (141) is provided on the air stream inlet side (4).

29. A wind power installation according to one of claims 25 to 28, **characterized in that** an additional enlarging section (142) is provided on the air discharge side (5).

30. A wind power installation according to one of claims 25 to 29, **characterized in that** the rotatable stand (135) comprises a rotatable buoyancy unit (146) which floats in a liquid (156).

31. A wind power installation according to claim 30, **characterized in that** the liquid (156) is held in a circular basin (155), in which the buoyancy unit (146) is arranged.

32. A wind power installation according to one of claims 25 to 31, **characterized in that** a king pin (157) projects downward from a bottom plate (147) of the buoyancy unit (146) and is rotatably supported in a bearing (159), which is formed in a bearing block (160).

33. A wind power installation according to claim 32, **characterized in that** a circumferential bearing (161) is arranged above the level of the liquid (158) between the side wall (148) of the buoyancy unit (146) and the basin (155).

34. A wind power installation according to one of claims 1 to 33, **characterized in that** it is arranged vertically.

35. A wind power installation according to claim 35, **characterized in that** an air feed device (190), which is preferably semicircular in design, is provided at the upper inlet of the wind power installation (1).

36. A wind power installation according to claim 34 or claim 35, **characterized in that** a flow deflection device (192), which comprises a flow channel (193), which deflects the outflowing air stream from the vertical direction into an essentially horizontal direction, is provided on the outlet side (5).

37. A wind power installation according to claim 36, **characterized in that** the flow channel (193) is arranged in a deflector body (194), around which the ambient air flows.

38. A wind power installation according to claim 36 or claim 37, **characterized in that** the flow channel (193) expands in the flow direction and preferably comprises an additional air acceleration device (195).

39. A wind power installation according to one of claims 36 to 38, **characterized in that** downstream of the flow channel (193) with respect to the direction of flow, several baffle plates (196) are arranged, which preferably project beyond the cross section of the flow channel (193).

40. A wind power installation according to one of claims 34 to 39, **characterized in that** a sail (191), which serves to keep the installation oriented in the optimal flow direction of the ambient air, is attached to the wind power installation (1).

41. A wind power installation system (170) for generating electric power by means of ambient air, **characterized in that** it comprises several wind power installations (1) according to one of claims 1 to 40, which are arranged on top of or next to each other.

42. A wind power installation system according to claim 41, **characterized in that** it comprises a stand, in which the wind power installations (1), which are arranged on top of or next to each other, are rotatably supported.

43. A method for generating electric power from ambient air, preferably ambient air which has been put in motion, which comprises the following steps:
- introducing ambient air into a first section (7) of a flow channel (3),
- accelerating the air stream by means of an acceleration device (39), which is installed in the first section (7) of the flow channel (3),
- further accelerating the air stream in a second tapering section (9) of the flow channel (3) by means of a constriction in the flow channel,
- conducting the air stream through a third section (11) of the flow channel (3) and the driving of a rotor (60) in this section,
- discharging the air stream into a fourth enlarging section (13) of the flow channel (3),
**characterized by**
- renewedly accelerating the air stream in a fifth section (15) of the flow channel (3), and discharging the air stream into the environment, wherein both kinetic energy and heat energy are extracted from the air stream during its passage through the flow channel.

44. A method according to claim 43, **characterized in that,** upstream of the acceleration device (39, 87) of the first and/or of the fifth section (7, 15) of the flow channel, the inflowing air is aligned as a laminar flow.

45. A method according to claim 43 or 44, **characterized in that,** downstream of the acceleration device (39, 87) of the first and/or of the fifth section (7, 15) of the flow channel, the through-flowing air is aligned again into a laminar flow.

46. A method according to one of claims 43 to 45, **characterized in that** the air stream is accelerated in the first and second sections of the flow channel so that it reaches a predetermined velocity by the time it enters the third section (11) of the flow channel.

47. A method according to one of claims 43 to 46, **characterized in that** a negative pressure is generated in the fourth enlarging section by the fifth section.

## Revendications

1. Éolienne (1) pour la génération d'énergie électrique par circulation d'air ambiant, comprenant un canal d'écoulement (3) au travers duquel est guidé l'air ambiant par formation d'un courant d'air, le canal d'écoulement (3) présentant une gaine extérieure qui le délimite, et présentant en outre :
- une première section (7) à section transversale essentiellement constante, dans laquelle l'air ambiant peut être amené, un dispositif d'accélération d'air (39) étant prévu dans la première section (7),
- une deuxième section (9) se rétrécissant,
- une troisième section (11), en rattachement à la deuxième section (9), dans laquelle est agencée un rotor (60), lequel est mis en en rotation par le courant d'air traversant, et dont la rotation sert à la génération d'énergie électrique,
- une quatrième section (13) s'évasant,
**caractérisé par**
- une cinquième section (15) dans laquelle est prévu un deuxième dispositif d'accélération d'air (85), qui sert à l'évacuation d'air entré dans le canal d'écoulement (3).

2. Éolienne selon la revendication 1, **caractérisée en ce que** le dispositif d'accélération d'air (39, 85) de la première ou de la cinquième section (7, 15) du canal d'écoulement (3) comprend au moins un ventilateur.

3. Éolienne selon la revendication 1 ou 2, **caractérisée en ce qu'**un dispositif de guidage d'écoulement (49, 87) est prévu dans la direction d'écoulement de l'air ambiant après le dispositif d'accélération d'air (39, 85) de la première ou de la cinquième section (7, 15) du canal d'écoulement (3), qui transforme un courant d'air tourbillonant ou tournant, issu de chaque dispositif d'accélération d'air respectif, en un courant laminaire.

4. Éolienne selon la revendication 3, **caractérisée en ce que** le dispositif de guidage d'écoulement (49, 87) est un stator.

5. Éolienne selon la revendication 3, **caractérisée en ce que** le dispositif de guidage d'écoulement (49, 87) est un dispositif à tube parallèle.

6. Éolienne selon l'une des revendications 3 à 5, **caractérisée en ce que** le dispositif de guidage d'écoulement comprend aussi bien un stator qu'également un dispositif à tube parallèle (101, 112).

7. Éolienne selon l'une des revendications 1 à 6, **caractérisé en ce qu'**un dispositif de guidage d'air (27, 29) est prévu avant le dispositif d'accélération d'air (39) de la première section (7) et/ou le dispositif d'accélération d'air (85) de la cinquième section (15) pour atteindre un écoulement d'air laminaire.

8. Éolienne selon la revendication 7, **caractérisée en ce qu'**un dispositif à tube parallèle (101, 112) est prévu avant le dispositif de guidage d'air (87) de la cinquième section (15).

9. Éolienne selon l'une des renvendications 5 à 8, **caractérisée en ce que** le dispositif à tube parallèle (101, 112) est formé d'une pluralité de sections de tubes (113) disposés de manière concentrique autour d'un tube central.

10. Éolienne selon l'une des revendications 1 à 9, **caractérisée en ce que** le canal d'écoulement (3) se rétrécit d'un angle α de 15° ou moins dans la zone de la deuxième section (9) se rétrécissant.

11. Éolienne selon l'une des revendications 1 à 10, **caractérisée en ce que** le canal d'écoulement (3) s'évase après le rotor (60) avec un angle β de 7° ou moins dans la quatrième section (13).

12. Éolienne selon l'une des revendications 1 à 11, **caractérisée en ce que** le diamètre du canal d'écoulement (3) dans la zone de la première section (7) est égal à celui dans la zone de la cinquième section (15).

13. Éolienne selon l'une des revendications 1 à 12, **caractérisée en ce que** la section transversale de la sortie (5) du canal d'écoulement (3) est plus grande que la section de l'entrée (4) du canal d'écoulement (3), par exemple essentiellement deux fois plus grand.

14. Éolienne selon l'une des revendications 3 à 13, **caractérisée en ce qu'**une section de tube (108) se rétrécissant est prévue derrière le dispositif de guidage d'écoulement (49) après le dispositif d'accélération d'air (39) dans la première section (7), dans laquelle un cône d'écoulement (109) se rétrécissant vers un bec est prévu, le long duquel le courant d'air s'écoule, l'angle de rétrécissement α du cône étant essentiellement de 15° ou moins.

15. Éolienne selon la revendication 14, **caractérisée en ce qu'**une section transversale de section constante se rattache à la section de tube du canal d'écoulement (108) se rétrécissant ou se resserrent, dans laquelle un autre dispositif de guidage d'écoulement (101, 112) est préférentiellement prévu.

16. Éolienne selon l'une des revendications 1 à 15, **caractérisée en ce qu'**un cône (119) s'évasant à partir d'un bec (120) jusqu'à la section transversale du moyeu du rotor (60) est prévu dans la deuxième section (9), dont l'angle d'évasement α correspond à l'angle de rétrécissement α de la deuxième section (9) se rétrécissant.

17. Éolienne selon l'une des revendications 1 à 16, **caractérisée en ce qu'**un cône (122) se rétrécissant vers un bec (121) est prévu dans la quatrième section (13), dont la section transversale de sortie est essentiellement la même que la section transversale du moyeu du rotor (60), l'angle de rétrécissement β du cône (121) correspondant à l'angle d'évasement β de la deuxième quatrième section (13) s'évasant.

18. Éolienne selon l'une des revendications 1 à 17, **caractérisée en ce qu'**une section de détente d'écoulement (116) du canal d'écoulement (3) se rattache à la quatrième section (13) se rétrécissant, laquelle présente un diamètre de sortie essentiellement constant, et préférentiellement un dispositif de guidage d'écoulement (124) supplémentaire.

19. Éolienne selon l'une des revendications 1 à 18, **caractérisée en ce qu'**un cône s'évasant à partir d'un bec avec l'angle β est prévu avant la cinquième section (15) avant le dispositif de guidage d'écoulement, dont la section transversale d'extrémité correspond essentiellement à la section transversale du moyeu du dispositif de guidage d'écoulement.

20. Éolienne selon l'une des revendications 1 à 19, **caractérisée en ce que** la troisième section (11) comprend une transmission (63), qui traduit la rotation du rotor (60) en un mouvement rotatif d'au moins un arbre de sortie (71) s'étendant essentiellement perpendiculairement au canal d'écoulement (3) et à partir de celui-ci, lequel arbre sert à la transmission d'un générateur (23).

21. Éolienne selon la revendication 20, **caractérisée en ce que** la transmission (63) comprend un boîtier (65), dans lequel est supporté un arbre (67), l'arbre (67) étant lié d'un côté à un rotor (60) extérieurement au boîtier, et de l'autre côté à un arbre d'transmission (71) agencé à 90°, et le boîtier (65) de la transmission étant supporté dans un dispositif de support (59) qui présente une plaque de support (62) qui est reliée à la gaine extérieure (6) du canal d'écoulement (3).

22. Éolienne selon l'une des revendications 1 à 19, **caractérisée en ce que** le rotor (60) est supporté sur un arbre (68) qui est lié de manière solidaire en rotation avec le dispositif de support (59), et que le rotor (60) présente une section de tube extérieure (70) qui constitue une partie de la gaine extérieure du canal d'écoulement, la section de tube extérieure (70) présentant une couronne dentée (80) qui sert à la transmission de la rotation du rotor à une transmission vers un générateur.

23. Éolienne selon la revendication 22, **caractérisée en ce que** plusieurs pignons, en particulier quatre pignons également répartis en périphérie, sont prévus pour la transmission de la rotation du rotor (60), qui sont respectivement liés à un arbre d'transmission, lequel est respectivement lié à un générateur.

24. Éolienne selon l'une des revendications 1 à 19, **caractérisée en ce que** le rotor est supporté sur un arbre, qui est lié de manière solidaire en rotation au dispositif de support, et que le rotor présente une section extérieure qui entraîne le rotor ou l'induit d'un générateur.

25. Éolienne selon l'une des revendications 1 à 24, **caractérisée en ce qu'**elle est agencée dans un châssis (135), et **en ce qu'**elle est supportée de manière pivotante.

26. Éolienne selon la revendication 25, **caractérisée en ce que** elle présente une paroi de fond (137), une paroi de recouvrement (136) supérieure, et une pluralité de piliers, les première à cinquième sections (7, 9, 11, 13, 15) du canal d'écoulement (3) étant essentiellement agencées entre les piliers extérieurs.

27. Éolienne selon la revendication 26, **caractérisée en ce que** l'éolienne (1) est agencée à distance de 1a paroi de fond (137).

28. Éolienne selon l'une des revendications 25 à 27, **caractérisée en ce qu'**une section (141) supplémentaire se rétrécissant est prévue du côté d'entrée du courant d'air (4).

29. Éolienne selon l'une des revendications 25 à 28, **caractérisée en ce qu'**une section (142) supplémentaire s'évasant est prévue du côté d'évacuation du courant d'air (5).

30. Éolienne selon l'une des revendications 25 à 29, **caractérisée en ce que** le châssis (135) pivotant comprend un corps de sustentation (146) pivotant, qui est supporté flottant dans un fluide (156).

31. Éolienne selon la revendication 30, **caractérisée en ce que** le fluide (156) est reçu dans un bassin (155) à la forme circulaire, dans lequel le corps de portance (146) est agencé.

32. Éolienne selon l'une des revendications 25 à 31, **caractérisée en ce qu'**un pivot (157) fait saillie vers le bas sur une paroi de fond (147) du corps de portance (146), et repose de manière pivotante dans un support (159) qui est formé dans un pallier-support.

33. Éolienne selon la revendication 32, **caractérisée en ce qu'**un support (161) rotatif est agencé au dessus du niveau du fluide (158), entre la paroi latérale (148) du corps de portance (146) et le bassin (155).

34. Éolienne selon l'une des revendications 1 à 33, **caractérisée en ce qu'**elle est disposée de manière verticale.

35. Éolienne selon la revendication 34, **caractérisée en ce qu'**un mécanisme d'introduction d'air est prévu à l'entrée supérieure de l'éolienne (1), qui est préférentiellement arrangé en une forme semi-circulaire.

36. Éolienne selon la revendication 34 ou 35, **caractérisée en ce qu'**un dispositif de redirection d'écoulement (192) est prévu du côté de sortie (5), qui présente un canal d'écoulement (193) qui redirige le courant d'air s'écoulant en sortie de la direction verticale dans une direction essentiellement horizontale.

37. Éolienne selon la revendication 36, **caractérisée en ce que** le canal d'écoulement (193) est disposé dans un corps de circulation (194) qui fait circuler librement l'air ambiant.

38. Éolienne selon la revendication 36 ou 37, **caractérisée en ce que** le canal d'écoulement (193) s'évase dans la direction d'écoulement, et présente préférentiellement un dispositif d'accélération d'air (195) supplémentaire.

39. Éolienne selon l'une des revendications 36 à 38, **caractérisée en ce que** plusieurs plaques de guidage (196) sont disposées dans la direction d'écoulement à derrière le canal d'écoulement (193), lesquelles font préférentiellement saillie au-dessus de la section transversale du canal d'écoulement.

40. Éolienne selon l'une des revendications 34 à 39, **caractérisée en ce qu'**une voile (191) est fixée à l'éolienne (1), qui sert à orienter celle-ci dans la direction d'écoulement optimale de l'air ambiant.

41. Système à éolienne (170) pour la génération d'énergie électrique par circulation d'air ambiant, **caractérisé en ce qu'**il présente plusieurs éoliennes (1) selon l'une des revendications 1 à 40 disposées les unes au-dessus des autres ou les unes à côté des autres.

42. Système à éolienne selon la revendication 42, **caractérisé en ce qu'**il présente un châssis, dans lequel les éoliennes(1) disposées les unes au-dessus des autres ou les unes à côté des autres sont supportées de manière pivotante.

43. Procédé pour générer de l'énergie électrique par circulation d'air ambiant, qui comprend les étapes suivantes :
- apport d'air ambiant dans une première section (7) d'un canal d'écoulement (3),
- accélération du courant d'air au moyen d'un dispositif d'accélération d'air (39) qui est disposé dans la première section (7) du canal d'écoulement (3),
- accélération supplémentaire du courant d'air dans une deuxième section (9), qui se rétrécit du canal d'écoulement (3) au moyen d'un rétrécissement du canal d'écoulement,
- traversée du courant d'air d'une troisième section (11) du canal d'écoulement (3) et la transmission d'un rotor (60) dans cette section,
- évacuation du courant d'air dans une quatrième section (13), qui s'évase, du canal d'écoulement (3), **caractérisé par**
- une ré-accélération du courant d'air dans une cinquième section (15) du canal d'écoulement (3) et évacuation du courant d'air dans l'environnement, de l'énergie thermique aussi bien que cinétique étant retirée au courant d'air pendant la traversée du canal d'écoulement.

44. Procédé selon la revendication 43, **caractérisé en ce que** l'air entrant est ajusté en écoulement laminaire avant le dispositif d'accélération (39, 87) de la première et/ou de la cinquième section (7, 15).

45. Procédé selon la revendication 43 ou 44, **caractérisé en ce que** le dispositif d'accélération (39, 87) de la première et/ou de la cinquième section (7, 15) du canal d'écoulement (3) réajusté l'air sortant en un écoulement laminaire.

46. Procédé selon l'une des revendications 43 à 45, **caractérisé en ce que** le courant d'air dans la première et la deuxième section du canal d'écoulement est accéléré à une vitesse prédéterminée par entrée dans la troisième section (11) du canal d'écoulement.

47. Procédé selon l'une des revendications 43 à 46, **caractérisé en ce qu'**une dépressurisation dans la quatrième section est générée par la cinquième section.
